(19) Europäisches Patentamt
European Patent Office
Office européen des brevets

(11) **EP 4 085 243 B1**

(12) **EUROPÄISCHE PATENTSCHRIFT**

(45) Veröffentlichungstag und Bekanntmachung des Hinweises auf die Patenterteilung:
**28.05.2025 Patentblatt 2025/22**

(21) Anmeldenummer: **21702160.9**

(22) Anmeldetag: **04.01.2021**

(51) Internationale Patentklassifikation (IPC):
**G01N 15/1434** *(2024.01)* **G01N 15/1429** *(2024.01)*
**G01N 15/14** *(2024.01)* G01N 15/10 *(2024.01)*

(52) Gemeinsame Patentklassifikation (CPC):
**G01N 15/1459; G01N 15/1429; G01N 15/1434;**
G01N 2015/1006

(86) Internationale Anmeldenummer:
**PCT/EP2021/050028**

(87) Internationale Veröffentlichungsnummer:
**WO 2021/136847 (08.07.2021 Gazette 2021/27)**

(54) **VERFAHREN UND VORRICHTUNG FÜR DIE BESTIMMUNG VON MERKMALEN VON PARTIKELN DURCH MULTIPARAMETRISCHE ERFASSUNG VON STREULICHT- UND EXTINKTIONSSIGNALEN**

METHOD AND APPARATUS FOR THE CHARACTERISTIC ESTIMATION OF PARTICLES BY A MULTIPARAMETRIC ACQUISITION OF SCATTERED AND ABSORBED LIGHT SIGNALS

MÉTHODE ET APPAREIL POUR ESTIMER LES CARACTÉRISTIQUES DE PARTICULES AVEC UNE ACQUISITION MULTIPARAMÉTRIQUE DE SIGNAUX LUMINEUX DISPERSÉS ET ABSORBÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.01.2020 DE 102020100020**

(43) Veröffentlichungstag der Anmeldung:
**09.11.2022 Patentblatt 2022/45**

(73) Patentinhaber: **LUM GmbH**
**12489 Berlin (DE)**

(72) Erfinder:
• **LERCHE, Dietmar**
**12524 Berlin (DE)**
• **LICHTENFELD, Heinz**
**10243 Berlin (DE)**
• **HUSSELS, Martin**
**14532 Kleinmachnow (DE)**
• **WOEHLECKE, Holger**
**10179 Berlin (DE)**
• **WOLLIK, Elia**
**12557 Berlin (DE)**
• **HOLKE, Martin**
**13125 Berlin (DE)**
• **WOLFF, Markus**
**14913 Niedergörsdorf (DE)**
• **MERTENS, Uwe**
**15471 Bestensee (DE)**

(74) Vertreter: **Gulde & Partner**
**Patent- und Rechtsanwaltskanzlei mbB**
**Berliner Freiheit 2**
**10785 Berlin (DE)**

(56) Entgegenhaltungen:
**EP-A1- 2 975 378 EP-A2- 2 634 557**
**WO-A2-2007/100723 WO-A2-2009/151610**
**US-A- 6 067 157 US-A1- 2011 058 168**
**US-A1- 2014 152 986**

• **LIN S M ET AL: "RAPID COMMUNICATION; Measurement of droplet velocity, size and refractive index using the pulse displacement technique; Droplet velocity, size and refractive index", MEASUREMENT SCIENCE AND TECHNOLOGY, IOP, BRISTOL, GB, vol. 11, no. 6, 1 June 2000 (2000-06-01), pages L1 - L4, XP020062972, ISSN: 0957-0233, DOI: 10.1088/ 0957-0233/11/6/101**

**Beschreibung**

Die Erfindung betrifft ein Verfahren und eine Vorrichtung zur Bestimmung von Kenngrößen von in Gasen oder Flüssigkeiten dispergierten Partikeln des nano- und mikroskaligen Größenbereichs, deren Anzahlverteilung sowie Konzentration mittels Partikelphotometrie.

Erfindungsgemäß wird das dadurch erreicht, dass Streulichtmessungen von Fraktionen oder Einzelpartikeln in einem Photometer für eine unterschiedliche Zahl von Öffnungs- bzw. Empfangswinkel realisiert, die Partikel gezählt und aus den ermittelten Streulichtintensitäten für jedes Partikel charakteristische Merkmale (z.B. Größe, Brechungsindex) über Auswertealgorithmen bestimmt werden und die Gesamtheit der in der Messprobe enthaltenden Partikel entsprechend klassifiziert wird. Die Bestimmung der Partikelmerkmale über einen Größenbereich von mehr als zwei Dekaden wird ohne Notwendigkeit der Auswechselung oder Anpassung der Geometrie der Probenmesskammer oder Optik ermöglicht.

Stand der Technik

Es existieren zahlreiche Methoden zur Größenbestimmung kolloidaler Teilchen (wie z.B. Nanopartikeln, Emulsionstropfen) oder grobdisperser Partikel.

Bekannte optische Verfahren sind z.B. statische und dynamische Streulichtmessungen (ISO 13320, ISO 22412) und gravitations- bzw. zentrifugationsbasierte (ISO 13317-1, ISO 13318-2) Sedimentationsverfahren. Den Untersuchungen von Suspensionen und Emulsionen mit Volumen-Streulichtverfahren oder Sedimentationsverfahren ist gemein, dass sich die ermittelten Partikelparameter generell auf das überlagerte Streuverhalten von allen sich im geometrischen Messvolumen befindenden Partikeln (Partikelensemble) beziehen. Die resultierende Streulichtintensität bzw. die Extinktion hängt dabei von der Partikelkonzentration und den optischen Partikeleigenschaften (Größe, Geometrie und Brechungsindexkontrast) ab. Durch mathematische Verfahren wird aus den überlagerten Messsignalen eine Partikelgrößenverteilung gewonnen. Unabhängig von den verwendeten Algorithmen sind diese stets intensitäts- bzw. extinktionsbasiert und können nur durch Umrechnung, z.B. mittels Mie-Theorie, bei Kenntnis der optischen Eigenschaften der Partikeln (identischer Brechungsindex und sphärische Form vorausgesetzt) in eine volumen- bzw. anzahlbewertete Verteilung transformiert werden, welche einen Vergleich mit bildgebenden Verfahren ermöglicht. Nachteilig ist, dass die Physik dieser Verfahren prinzipiell keine Informationen über Einzelpartikelmerkmale ermöglicht. Auch die Wechselwirkung von akustischen Wellen und Röntgenwellen mit Partikeln wird zur Korngrößenbestimmung genutzt. Auch diese Verfahren liefern nur gemittelte Ensemblewerte, keine anzahlbewerteten Verteilungen sowie keine Charakteristika von Einzelpartikeln. Es ist auch festzuhalten, dass die bisher beschriebenen Streuverfahren keinen Zugang zur Konzentration der Partikeln einzelner Größenklassen für polydisperse Suspensionen und Emulsionen ermöglichen.

In der Literatur werden auch verschiedene Messverfahren beschrieben, welche anzahlbewertete Korngrößenverteilungen zum Ziel haben. Hier sind an erster Stelle optische Verfahren zu nennen, welche die Partikel statisch bzw. dynamisch mit bildgebenden Verfahren erfassen und manuell oder mit Hilfe von computergestützten Bildauswerteverfahren die Größe jedes abgebildeten Partikels bestimmen. Für submikroskalige und nanoskalige Teilchen werden klassischerweise statische transmissions- bzw. elektronenmikroskopische Verfahren sowie neuerdings kraftmikroskopische Verfahren eingesetzt.

In jedem Fall können auf der Grundlage von 2D-Aufnahmen nur mit Annahmen zur 3D-Form volumenbasierte

Korngrößenverteilungen berechnet werden. Auch sind für breite Verteilungen Aufnahmen bei unterschiedlichen Bildvergrößerungen notwendig, was Kalibrierungen und die Berechnung von kumulativen Verteilungen deutlich erschwert und Konzentrationsbestimmungen defacto nicht ermöglicht. Die Methoden sind auch sehr zeitaufwendig. Die beschriebenen Methoden sind darüber hinaus nur für trockene Partikel (powders) einsetzbar. Dynamische bildgebende Techniken (z.B. Flow Cam, Bettersizer, CAMSIZER, QICPIC) zeichnen sich durch bessere Statistik aus. Dynamische Verfahren sind jedoch auf Partikel größer 800 nm begrenzt [ISO 13322].

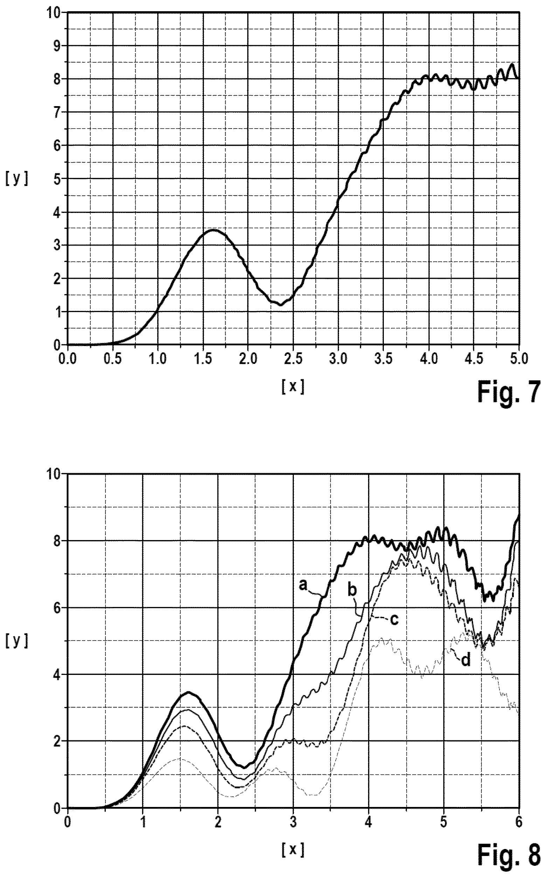

Das Messprinzip der Durchfluss-Zytometer ist eine Einzelteilchen-Streulichtphotometrie. Im Stand der Technik wurden hierzu keine Sachverhalte offenbart, welche z.B. die experimentelle gleichzeitige Bestimmung der Teilchengröße und des Brechungsindex von Nano- und Mikropartikeln ermöglichen. Die Analyse der Partikelgröße für mikroskalige Partikeln ist infolge der Mehrdeutigkeiten des Intensitätsverlaufs des Streulichtes vom Partikeldurchmesser nicht immer gegeben (vgl. z.B. Abb. 7) und Lösungen für dieses Problem sind bisher nicht offenbart. Experimentelle Erfahrungen zeigen auch, dass es in den beschriebenen Anordnungen insbesondere für Partikel mit mit großen Partikelmassen infolge geometrischer Größe oder Dichte zu einer deutlichen Unterbestimmung der Partikelanzahl insbesondere für die größeren Klassen kommt (Segregation). Es sei aber auch darauf hingewiesen, dass die Überlagerung von Streulicht mit sehr unterschiedlichen Intensitäten infolge deutlich unterschiedlicher Partikelgrößen es andererseits zur Unterbestimmung der kleineren Teilchen kommt. Dies kann auch unabhängig von der Größe für Teilchen mit sehr unterschiedlichem Brechungsindex oder Teilchenfraktionen, deren Brechungsindexkontrast sehr klein ist.

Es ist auch eine Druckschrift EP 2908119 B1 bekannt, welche sich mit einer "Method for Detection of Nano-Particels" basierend auf einem Durchflussprinzip beschäftigt. Der Messbereich für kleine Teilchen (bevorzugt < 100nm), soll durch Verkleinerung der Detektionszone erweitert werden. Die Messungen erfolgen nur für einen Winkel in Seitwärtsstreuung. Die Druckschrift beschreibt ein Verfahren, welches den typischen Messbereich der Flowzytometrie in den Nanobereich verschiebt und für mikroskalige Teilchen prinzipiell nicht anendbar ist.

In der Druckschrift EP 2388569 A1 wird eine Methode und ein Apparat mit zwei Sensoren, welche nach physikalisch unterschiedlichen Messverfahren arbeiten, zur Größen- und Anzahlbestimmung von in Flüssigkeiten dispergierten Partikeln publiziert, welche als single particle optical sensing (SPOS) bezeichnet wird. Der große messtechnische Unterschied zu dem Prinzip eines Flowcytometers besteht darin, dass mit unterschiedlichen physikalischen Messprinzipien gearbeitet wird, um breitverteilte Partikelgrößen zu analysieren (Streusensor und Extinktionssensor) und methodenbedingt die Messkammertiefe stark minimiert wird sowie der Laserstrahl einen kleinen Fokusdurchmesser mit einer Gausintensitätsverteilung über den Querschnitt besitzt.

Eine simultane Erhebung der Extinktion und der Streuung für das gleiche Partikel ist in dieser Druckschrift nicht offenbart und aus technischer Sicht mit dem vorgeschlagenen Realisierungsprinzip auch nicht möglich.

Eine simultane Bestimmung von mehreren Partikelmerkmalen (z. B. Größe, Brechungsindex, Geometrie) für alle Einzelpartikel der Messprobe ist nicht offenbart.

Die in den letzten Jahren am Markt etablierte Partikeltrackinganalyse (ISO 19430:2016) misst mittels Laserinduziertem Streulicht das zeitliche Displacement von Nano- und subskaligenalen Partikeln und berechnet nach Einstein und Smoluchowski aus dem Quadrat der mittleren Wegstrecke pro Zeiteinheit die Partikelgröße. Nichtgelöste Defizite diese Methode bestehen in der physikalisch begründeten Größenabhängigkeit der Detektionssensitivität, welche sowohl zu Verlusten bei der Ermittlung der Partikelanzahl als auch eine Verzerrung der Partikelverteilung insbesondere im Feinkornanteil zur Folge hat. Eine weitere Unzulänglichkeit besteht in der Bestimmung des aktiven Messvolumens, welches von der Größe und/oder dem Refraktionsindex der dispergierten Teilchen abhängt. Teilchenkonzentrationsbestimmungen polydisperser Proben sind damit immer fehlerbehaftet.

Diese Technik ist ebenfalls nur für in Flüssigkeiten dispergierten Partikeln einsetzbar.

Allen oben genannten Prinzipien und Messvorrichtungen ist gemein, dass sie nicht gleichzeitig mehrere Merkmale (z.B. Größe, Brechungsindex, Geometrie, Anzahl, Konzentration) von in Luft oder Flüssigkeiten dispergierten Partikeln, also in einer Suspension, Emulsion oder einem Aerosol bestimmen können.

Vollständigkeitshalber sei erwähnt, dass einige Dokumente veröffentlicht sind, in denen für Spezialfälle die gleichzeitige Bestimmung von Größe und Brechungsindex von Partikel in Dispersionen beschrieben werden, welche verfahrenstechnisch sich von der beantragten Erfindung unterscheiden und zudem eine Reihe von Einschränkungen besitzen. Die Druckschrift WO 2017/072360 A1 soll bevorzugt für Teilchen gelten, welche kleiner als die Wellenlänge des eingestrahlten Lichtes sind (bevorzugten Wellenlänge 405 nm oder 488 nm). Dieser Messbereich soll aber bis zur dreifachen Wellenlänge erweitert werden können. Das optical scatter ratio (Vorwärtsstreuung/Seitwärtsstreuung) soll in diesem Bereich unabhängig vom Brechungsindex sein. Die Größe kann daraus bestimmt werden und nach der Theorie aus einen der beiden Streulichtmessungen der Brechungsindex.

Eine veröffentlichte Tabelle mit experimentellen Ergebnissen dokumentiert nur Ergebnisse für Partikel, welche alle kleiner als die eingestrahlte Wellenlänge (405 nm) sind. Es wurden nur Messungen mit PS- und SiO2 Partikel angegeben, wobei die Fehlerangaben der Messungen alle größer als die der Herstellerangaben sind

Eigene theoretische Berechnungen bestätigen den größeren Fehlerbereich, wobei die Methode versagt, wenn die schon oben erwähnten Intensitätsoszillationen in die Empfangswinkelbereiche eintreten. Eine Ausdehnung dieser Methode für Partikelgrößen > Wellenlänge des eingestrahlten Lichtes wird deshalb in der Regel nicht möglich sein.

Ein sehr komplexes Messverfahren gemäß der US-Patenschrift 9,068,915 B2 ermittelt den Brechungsindex einer Partikelart durch den Vergleich der Vorwärts- und Seitwärtsstreuung von zwei Proben. Voraussetzung für die Anwendung dieses Verfahren ist, dass erstens die zwei Proben unterschiedliche Korngröße haben und zweitens die Teilchengröße und der Brechungsindex einer Probe (Charge) bekannt sein muss. Alternativ kann mit dieser Methode der Brechungsindex von Partikeln bestimmt werden, wenn deren Größe bekannt ist, also keinesfalls eine gleichzeitige Bestimmung von Größe und Brechungsindex.

Wie im Fall von polydispersen Verteilungen zu verfahren ist, wird nicht offenbart.

Die WO 2007/100723 A2 und die US 2011/0058168 A1 beschreiben ein optisches System für ein Durchflusszytometer, das einen Durchflusskanal mit einer Abfragezone und eine Beleuchtungsquelle, die den Durchflusskanal in der Abfragezone aus einer bestimmten Richtung beleuchtet, umfasst.

Das optische System umfasst vorzugsweise ein Linsensystem und ein Detektionssystem. Das Linsensystem umfasst vorzugsweise mehrere Linsenflächen, die entlang einer Ebene senkrecht zum Strömungskanal angeordnet sind und Licht aus der Abfragezone sammeln und kollimieren können. Das Detektionssystem umfasst vorzugsweise mehrere Detektoren, die das Licht aus dem Linsensystem erfassen können. Jeder Detektor enthält vorzugsweise einen lokalen Filter, der unabhängig für bestimmte Wellenlängen filtert. So kann der Benutzer die Filter in beliebiger Reihenfolge austauschen, um die gleichen Erfassungsparameter zu erzielen.

Mit der US 6 067 157 A wird ein optischer Analysator mit einer Konfiguration bekannt, die besonders für die Verwendung mit planaren Flüssigproben-Durchflusszellen geeignet ist. Angeordnet ist eine polarisierten Lichtquelle und mindestens zwei Großwinkel-Streulicht-Photodetektoren, die jeweils in spitzen und in rechten oder schrägen Winkeln zu den einfallenden Lichtstrahlen angeordnet sind. Die Unterschiede in den Lichtintensitäten, die an den beiden Photodetektoren gemessen werden, werden verwendet, um die Bestandteile der Probe zu quantifizieren.

Die WO 2009/151610 A2 offenbart eine Durchflusszytometer-Baugruppe mit einer Fluidsteuerung, die so konfiguriert ist, dass sie einen hydrodynamisch fokussierten Flussstrom bildet, der ein äußeres Mantelfluid und ein inneres Kernfluid enthält. Eine kohärente Lichtquelle ist so konfiguriert, dass sie ein Partikel in der inneren Kernflüssigkeit beleuchtet. Ein Detektor ist so konfiguriert, dass er eine räumlich kohärente Verteilung von elastisch gestreutem Licht von dem Teilchen erfasst, das durch die kohärente Lichtquelle angeregt wurde. Ein Analysemodul ist so konfiguriert, dass es einen dreidimensionalen Morphologieparameter des Teilchens aus einer räumlich kohärenten Verteilung des elastisch gestreuten Lichts extrahiert.

Aus der EP 2 634 557 A2 ist ein Verfahren und ein System zur Kalibrierung eines Flusszytometers durch Teilchen mit bekannten Brechungsindices bekannt.

Die US 2014/152986 A1 beschreibt ein Verfahren und eine Vorrichtung zur Verbesserung von Messungen des Streulichts von Teilchen durch Kontrolle der Mehrfachstreuung und Koinzidenzzählpegel. Der Streuweg in der Partikeldispersion und die Partikelkonzentration werden eingestellt, um die Mehrfachstreuung bei der Messung der Gesamtteilchenstreuung zu reduzieren. Das Volumen der Partikeldispersion und die Partikelkonzentration werden angepasst, um die Koinzidenzzahlen bei Einzelpartikel-Streuungsmessungen zu reduzieren. Die Ausrichtung des optischen Systems zur Messung des gestreuten Lichts wird durch eine Reflexionsvorrichtung aufrechterhalten.

In der Veröffentlichung "RAPID COMMUNICATION Measurement of droplet velocity, size and refractive index using the pulse displacement technique" von S M Lin et all,XP020062972 wurde untersucht, die Anwesenheit von Gasblasen bei der Ölexploration zu erkennen und zu quantifizieren. Es wurde eine neuartige Methode zur gleichzeitigen Messung von Geschwindigkeit, Größe und Brechungsindex großer optisch transparenter Blasen und Tröpfchen entwickelt. Die Methode basiert auf der zeitlichen Verschiebung der gebrochenen und reflektierten Strahlen, die von den sich bewegenden Partikeln gestreut werden.

Mit der EP 2 975 378 A1 wird eine Methode vorgestellt, mit der kleine Teilchen in Lösung mit verschiedenen Strukturen und Größen bis zu einigen Nanometern durch Lichtstreuung gemessen werden können. Es wird eine Technik beschrieben, die es erlaubt, die traditionelle Rayleigh-Gans-Näherung zu erweitern. Die beschriebene Methode ist anwendbar für die Bestimmung der strukturellen Merkmale von unregelmäßigen Partikeln, deren Streuung von ihrer Orientierung in Bezug auf die Richtung des einfallenden Lichts abhängt.

Alle aus dem Stand der Technik bekannte Lösungen basieren auf Messprinzipien, die sich wesentlich von dem Gegenstand der offenbarten Erfindung unterscheiden und/oder wesentliche Einschränkungen und Nachteile insbesondere für breit verteilte Partikelproben im Nanobereich bzw. submikroskaligen und mikroskaligen Größenbereich gegenüber der beanspruchten erfinderischen Lösung haben.

Aufgabenstellung

Suspensionen (z.B. in wässrigen Medien dispergierte Polymer-, Oxidpartikel aber auch biologische Materialien) oder Emulsionen (z.B. Ernährungsinfusionen) kommen in vielen Bereichen der Natur, der Medizin, der Industrie, der Forschung und in privaten Haushalten vor und spielen dort eine überaus wichtige Rolle. Auch unerwünschte Partikel im Produktionsbetrieb, Schmutzpartikel in Abwässern oder die Partikellast (z.B. Mikroplastik) in natürlichen Gewässern erfordern geeigneter Reinigungsmaßnahmen (z.B. Trinkwasseraufbereitung, Luftreinigung).

Die quantitative Bestimmung von Partikelmerkmalen, wie z.B. Größe, Anzahl, Konzentration oder deren optische Eigenschaften ist sowohl unter wissenschaftlichen, produktrelevanten oder risikorelevanten Aspekten (z.B. Nanomaterialklassifiktion) von großer Bedeutung. Diese Erfordernisse ergeben sich insbesondere im Bereich der modernen Partikeltechnologie für in Gasen oder Flüssigkeiten dispergierte nano- und mikroskalige Teilchen. Auch um die Dispersionseigenschaften besser zu verstehen und beeinflussen zu können oder relevante Produkte zu formulieren, ist es unerlässlich, neben der chemischen Zusammensetzung der dispergierten Phase, auch die Größe (Teilchengrößenverteilung (TGV), Anzahl (Konzentration) oder optischen Eigenschaften, wie Form und Brechungsindex der Teilchen zu kennen.

Bekannte Messverfahren im beanspruchten TGV-Bereich, wie im Abschnitt "Stand der Technik" exemplarisch aufgeführt, haben eine Reihe von Nachteilen. So sind etablierte Referenzverfahren (Mikroskopie oder Elektronenmikroskopie) sehr zeitaufwendig und für dispergierte, stark polydisperse Partikelsysteme ergeben sich experimentelle und messtechnische Schwierigkeiten, die den breiten insbesondere industriellen Einsatz verbieten. Andererseits sind die weitverbreiteten statischen und dynamischen Lichtstreuverfahren (ISO 13320, ISO 22412) Ensemblemethoden. Die physikalischen Messprinzipien erlauben keine Informationen über Einzelpartikel und die gemessene Streuintensität ist ein Partikel abhängig von deren Größe, der Geometrie und dem Brechungsindexkontrast sowie den optischen Charakteristika der Messgeräte und zudem ab einer bestimmten Korngröße keine ein-eindeutige Funktion der Partikelgröße mehr.

Die Erfindung stellt sich daher die Aufgabe, für jedes individuelle flüssigkeits- bzw. gasgetragene Einzelpartikel einer Suspension, Emulsion oder einem Aerosol mit Hilfe von raumwinkelabhängigen Streulichtmessungen mehrere Partikelkenngrößen, wie Partikelkonzentration, Größenverteilung und Anzahl der Partikel pro Größenklasse sowohl für eng- als auch über mehrere Größenordnungen verteilte Partikel zu bestimmen, sowie zusätzliche Partikelmerkmale, wie z.B. Brechungsindex oder Nichtsphärizität aus den Messsignalen der Einzelpartikel über Auswertealgorithmen zu quantifizieren. Die Erfindung fokussiert weiterhin auf eine hohe Größentrennschärfe von wenigen Nanometern. Eine weitere Aufgabenstellung besteht darin, im Fall der Realisierung als Einzelteilchenstreulichtphotometer eine Detektionsrate (Events/s, häufig auch als Frequenz bezeichnet) der Streulichtereignisse z.B. von mindestens 10000 Ereignissen pro Sekunde zu ermöglichen und diese allein durch hydrodynamische oder aerodynamische Mittel automatisiert zu steuern, um über einen gegenüber dem Stand der Technik (z.B. EP 2388569 A1) sehr großen und hohen Konzentrationsbereich, z.B. von $10^2$ bis $10^9$ Partikel/ml, der primären Messprobe die Partikelmerkmale für jedes Partikel ohne Koinzidenzverfälschung und Verdünnung der Primärprobe zu detektieren, vorzugsweise in real-time zu analysieren, entsprechend zu klassifizieren und dies ohne einen Austausch von Messkammern oder geometrische Änderungen der Messzelle vorzunehmen zu erreichen.

Die Aufgabe der Erfindung wird gelöst durch die Merkmale in den Ansprüchen 1 und 15.

Zweckmäßige Ausgestaltungen der Erfindung sind in den Unteransprüchen enthalten.

Ein besonderer Vorteil des erfindungsgemäßen Verfahrens besteht in einer effektiven Ermittlung von Partikelmerkmalen, indem für die Bestimmung der Eigenschaften von mikroskaligen und submikroskaligen Partikeln bis in den einstelligen Nanobereich in Durchflussmesszellen mit hydrodynamischer Fokussierung durch multiparametrische Erfassung von Extinktions- und/oder Streulichtsignalen, die Streulicht- und die Extinktionssignale der Partikel in mindestens zwei Raumwinkelbereichen mit hoher Detektionsrate (Frequenz) gezählt und simultan vermessen, analog oder digital mit Simulationsrechnungen der Streulichtverteilung durch analytische oder numerische Verfahren für die verschiedenen Raumwinkelbereiche verglichen werden, um daraus die individuellen Partikelkenngrößen über einen vier Größenordnungen betragenden dynamischen Partikelgrößenbereich koinzidenzfrei auch für hohe Partikelkonzentrationen (z.B. $10^9$ Partikel/ml) der Messprobe zu bestimmen, wobei unterschiedliche Öffnungswinkel für die Vorwärtsstreuung oder mehrere Detektionsrichtungen für die Streulichtmessung sowie beliebige Kombinationen dieser zum Einsatz kommen, wobei die Partikelgröße und der Brechungsindex aus den jeweiligen Streuintensitäten der simultanen Messungen ermittelt werden; wobei um die Sphärizität beziehungsweise die Nichtsphärizität zu bestimmen, der gesamte zeitliche Intensitätsverlauf des Streulichtimpulses während des Durchganges des Teilchens durch das Messvolumen gemessen und in real time analysiert oder gespeichert wird.

Detektionsraten im Sinne dieser Erfindung bedeuten Zählevents im Bereich von weniger als 10 Partikel bis zu einer Million Partikel pro Sekunde, insbesondere von 100 bis 10000 Partikel pro Sekunde mit einer Impulshöhe über den Rauschsignalen. Bei Partikelkonzentrationen von vorzugsweise $10^{10}$ Partikel pro ml wird die Partikelanzahl weitgehend koinzidensfrei gemessen. Für Detektionsraten von z.B. 10 kHz treten Zählverluste von weniger als 0,0035 (0,35 %) auf. Mit anderen Worten, die erfinderische Lösung vermisst defacto alle Partikel des Probenstrom und zeichnet sich durch eine extrem hohe sensor sensitivity im Vergleich zum Stand der Technik aus. So werden in EP 2338569 A1 (z.B. Abb.9) Effektivitätsfaktoren von lediglich wenigen Prozent bis Zentelprozent angegeben, welche zu dem von der Partikelgröße abhängen.

Weitere Vorteile der Erfindung resultieren daraus, dass unterschiedliche Öffnungswinkel für die Vorwärtsstreuung oder mehrere Detektionsrichtungen für die Streulichtmessung sowie beliebige Kombinationen dieser zum Einsatz kommen.

Im Fall von Partikeln mit Größenparametern k größer oder ungefähr gleich 20 kommen z.B. unterschiedliche Öffnungswinkel für die Vorwärtsstreuung zum Einsatz.

Ein zusätzlicher Vorteil der Erfindung resultiert daraus, dass im Fall von Partikeln mit wenig unterscheidbaren Vorwärtsstreulichtkurven in den verschiedenen Empfangswinkeln (insbesondere bei einem Größenparameter k kleiner oder ungefähr gleich 20) mehrere Detektionsrichtungen in Seitwärtsrichtungen mit unterschiedlichen Sensivitäten zum Einsatz kommen.

Erfindungsgemäß erfolgt eine Simulationsrechnung mittels Mie-Theorie oder numerischer Berechnungen in Übereinstimmung mit dem entsprechenden optischen Aufbau und aus dem Vergleich zwischen Theorie und experimenteller Streuintensität wird eine eventuelle Mehrdeutigkeit bezüglich der Partikelgröße aufgehoben. Damit sind auch mikroskalige Partikel typischerweise bis zu 100 µm analysierbar.

Erfindungsgemäß werden durch Konsistenzprüfung der modellierten und der experimentell bestimmten Intensitäten der Partikelimpulse für unterschiedliche Öffnungswinkel und/oder Raumwinkelbereiche die Partikeleigenschaften, wie Größe oder optische Partikelparameter bestimmt.

Bei Nichtübereinstimmung der in den Winkelbereichen gemessenen Streulichtintensitäten mit den möglichen theoretischen Intensitäten wird bei z.B. bekannter Größe und bekanntem Brechungsindex der Teilchen auf eine Asphärizität geschlossen und ein Asphärizitätsindex berechnet.

Ein weiterer Vorteil der Erfindung besteht darin, dass im Fall von Einzelpartikelstreuung aus dem Vergleich der experimentellen, digitalisierten Impulsform eines Partikels mit bekanntem Brechungsindex und den entsprechenden Simulationsrechnungen für kugelige Partikel für den gleichen Raumwinkelbereich die Form des Partikels als sphärisch oder nichtsphärisch klassifiziert wird.

Mit Hilfe von Theorien, die den Zusammenhang zwischen der Geometrie eines Teilchens (Asphärizität) und dem Streuverhalten behandeln, werden quantitative Ergebnisse erhalten.

Die Erfindung ermöglicht die Analyse aller in der Probe befindlichen Teilchen, von Partikelwandanhaftungen oder Separationserscheinungen abgesehen, kumulative Verteilungen bzw. Subfraktionen der Partikel entsprechend z.B. Größe, Form und Brechungsindex zu klassifizieren. Die Partikelanzahlen (Konzentrationen) pro Merkmalseinheit werden dabei absolut bestimmt, angezeigt und ausgegeben.

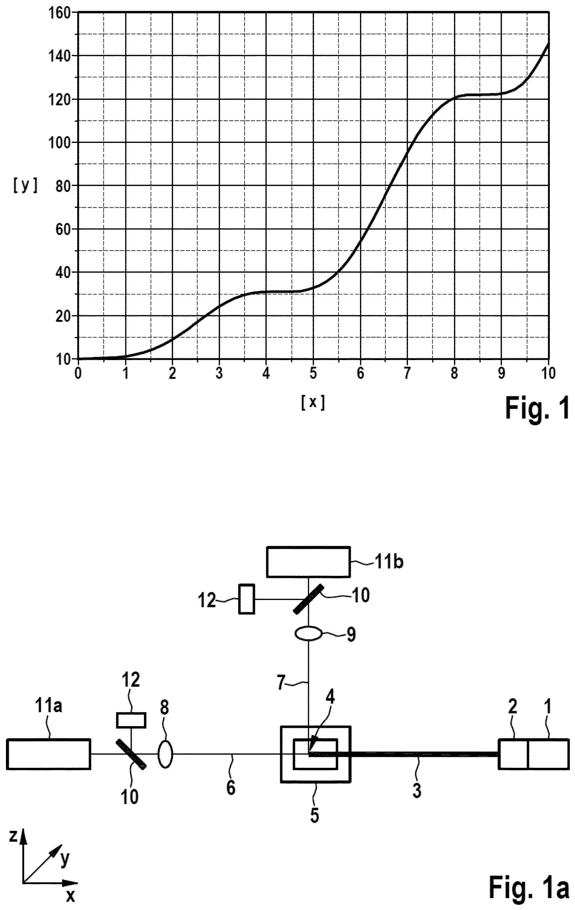

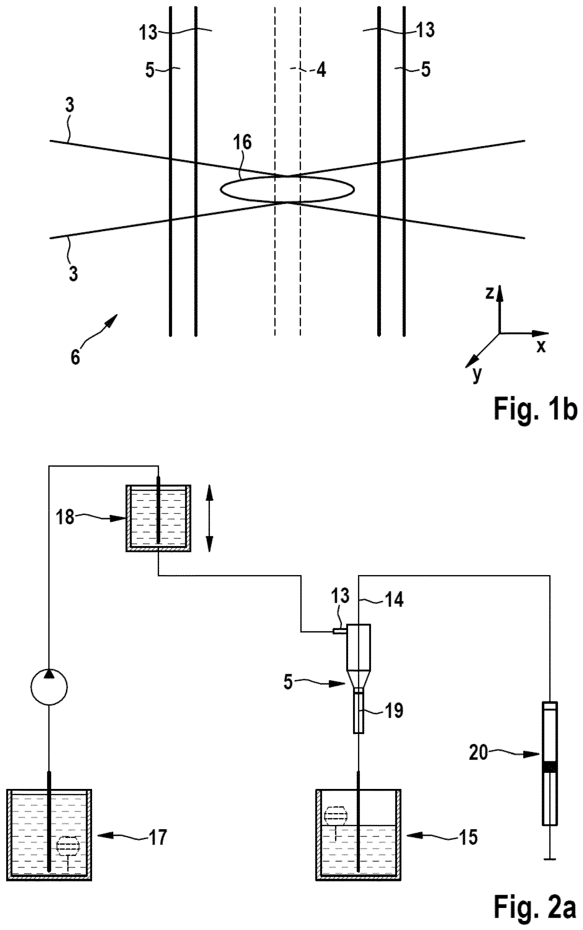

Es wird ein Laser mit variabler Strahlintensität und einem asphärischen Strahlquerschnitt (Fokus) mit konstanter Lichtintensität mindestens über den Querschnitt des Probenstroms eingesetzt (16, Abb. 1b). Damit ist der Streuimpuls, im Gegensatz zum im Stand der Technik erläuterten (SPOS) nicht abhängig von der Trajektorie des vermessenen Partikels im Messvolumen und eine Deconvolution nicht notwendig. Im Fall von unzureichender Homogenität der Intensität wird diese durch Normierungsverfahren korrigiert (z.B. experimentelle Ermittlung der Abweichung von einer konstanten Intensität oder mittels Vermessung größenzertifizierter monodisperser Referenzpartikel. Zur Erweiterung des Messbereichs können auch Laser mit verschiedenen Wellenlängen oder mehrere Laser inklusive der Fluoreszenz eingesetzt werden.

Das Ausmaß der hydrodynamischen bzw. aerodynamischen Messstromfokussierung kann in Abhängigkeit von der Ausgangsanzahlkonzentration der Messprobe auf der Grundlage der Kenntnis oder eines ersten Messzyklus manuell oder automatisiert durch das Verhältnis des Sheathflows zum Probenstrom angepasst werden.

Ein weiterer Vorteil der Erfindung besteht darin, dass für die Größenbestimmung sehr breiter polydisperser Proben kein Austausch von Messkammern oder Änderungen z.B. der Geometrie der Flowcell sowie des optischen Aufbaus vorzunehmen sind. Für extrem breite Verteilungen bis in den Größenbereich von mehrstelligen Mikrometern kann die Vermessung von unterschiedlichen Streuwinkeln oder die simultane Registrierung der Extinktion der Einzelteilchen zum Einsatz kommen.

Zusätzlich vorteilhaft ist die Möglichkeit, dass nacheinander beam stops eingefügt oder verschoben werden oder ringförmige, rotierbare Detektoren, die jeweils einen Winkelbereich abdecken, genutzt werden oder unterschiedliche Blenden in Kreissektoren eingeführt werden. Es können auch optische Elemente mit speziellen Coatings verwendet werden, deren Transparenz für die jeweilige zum Einsatz kommende Laserwellenlänge durch z.B. elektrische Felder ohne mechanische Verschiebung variiert werden kann.

Durch Anwendung von ringförmigen Detektoren oder unterschiedlichen Blenden in Kreissektoren entfallen die in den Beispielen beschriebenen Wiederholungsmessungen in anderen Winkelbereichen, welches vorteilhaft den experimentellen Aufwand reduziert und durch die simultane Messung unterschiedlicher Winkelbereiche für das gleiche Partikel die Messgenauigkeit erhöht.

Für Extinktionsapplikationen mittels hydrodynamischer Fokussierung und durch Ausblenden der durch die Primärstrahlung beleuchteten Gebiete im Bildraum neben den hydrodynamisch fokussierten Teilchen wird das Verhältnis der Lichtintensität der Lichtquelle in der Küvette zu einem Extinktionssignal verbessert, um kleinere Teilchen zu detektieren.

Durch eine nach dem Objektiv eingefügte Lochblende, die den Durchmesser des Laser-Primärstrahl nach dem Objektiv besitzt, wird ein Großteil der Vorwärtsstreuung, die auch auf den Empfänger treffen würde, eliminiert, dadurch werden der Messbereich zu kleineren Teilchen hin erweitert und genauere Berechnungen der Partikelgröße möglich. Vorteilhaft mit Bezug auf die Druckschrift EP 2 388 59 A1 ist der Umstand, dass durch die Vereinzelung der Partikel die Transmission in den Bereichen zwischen den Teilchen keine partikelkonzentrationsabhängige Trübheit aufweist.

Verwendung der Vorrichtung und die Anwendung des Verfahrens erfolgt erfindungsgemäß zur Analyse von mehreren Merkmalen von Einzelpartikeln bzw. der Klassifikation oder Identifikation von Partikelfraktionen im industriellen und akademischen Bereich, wie W/O bzw. O/W Emulsionen, Aerosolen, Slurries für Waverpolishing, Tinten- und Pigmentsuspensionen, Proben zellulärer und subzellulärer Partikel (u.a. Zellen, Viren, Bakterien) biologischen Ursprungs oder für Applikationen z.B. dem Design von Nanopartikeln, Quantifizierung der Stabilität von Dispersionen, Untersuchungen zum Lösungs-, Agglomeration- und Flockungsverhalten disperser Phasen, Quantifizierung des Fortschritts von Dispergierungen.

Die Erfindung soll nachstehend an Hand von zumindest teilweise in den Abbildungen dargestellten Ausführungsbeispielen näher erläutert werden.

Es zeigen:

Abb.1:    Extinktion von einigen organischen Stoffen (n = 1,43); λ = 532nm; x = Partikeldurchmesser [μm]; y = Streuquerschnitt [willk. Einheiten]

Abb. 1a: Optisches Grundprinzip des Messverfahrens;

Abb. 1b: Geometrie im Probenraum;

Abb. 2a: Hydrodynamische Fokussierung;

Abb. 2b: Flowcell;

Abb. 3a: Elektronisches Schema und Datenflüsse innerhalb des Gerätes und der externen Software SepView;

Abb. 3b: Elektronische Komponenten für den Betrieb und für die Datenverarbeitung;

Abb. 4: Analoger Einzelimpuls eines Teilchens und exemplarische charakteristische quantitative Merkmale für die Impulsform für eine mögliche Impulsunterscheidung als Grundlage für eine manuelle oder automatische Klassifikation von Partikelmerkmalen;

Abb.4a: Messergebnisse für simultane Streulichtdetektion in Vorwärts- (links) und Seitwärtsrichtung (rechts) einer Mischung aus unterschiedlich großen Polystyrenpartikeln;

Abb. 5: Konzentrationsbestimmung für Polystyrenpartikel und Zählraten für Polystyrenmikro- und Goldnanopartikel;

Abb. 6: Prinzipielle Abfolge eines typischen Analyseflows für die Berechnung der Partikelgrößenverteilung.

Abb. 7: Streulichtkurve von Polystyrenpartikeln; n=1,59; Empfangswinkelbereich: 4°-12,33°; λ = 532nm;

    x = Partikeldurchmesser [μm]; y = Mie-Streulichtintensität [willk. Einheiten];

Abb. 8: Streulichtkurve von Polystyrenpartikeln (verschiedene Empfangswinkelbereiche); λ = 532nm; n=1,59; a: 4°-12, 33°;

    b: 5°-12,33°; c: 6°-12,33°; d: 8°-12,33°; x = Partikeldurchmesser [μm]; y = Mie-Streulichtintensität [willk. Einheiten]

Abb. 9: Streulichtkurve von Partikeln mit einem angenommenen Brechungsindex n = 1,8; (verschiedene Empfangswinkelbereiche) λ = 532nm; a: 4°-12,33°; b:

    5°-12,33°; c: 6°-12,33°; d: 8°-12,33°; x = Partikeldurchmesser [μm]; y = Mie-Streulichtintensität [willk. Einheiten];

Abb. 10: Streulichtkurve von Siliziumdioxyd mit einem angenommenen Brechungsindex n = 1,46 (verschiedene Empfangswinkelbereiche); λ = 532nm; a: 4°-12,33°;

    b: 5°-12,33°; c: 6°-12,33°; d: 8°-12,33°; x = Partikeldurchmesser [μm]; y = Mie-Streulichtintensität [willk. Einheiten];

Abb. 11: Streulichtkurve von Siliziumdioxyd mit einem angenommenen Brechungsindex n = 1,47 (verschiedene Empfangswinkelbereiche); λ = 532nm; a: 4°-12,33°;

    b: 5°-12,33°; c: 6°-12,33°; d: 8°-12,33°; x = Partikeldurchmesser [μm]; y = Mie-Streulichtintensität [willk. Einheiten]

Abb. 12: Streulichtkurve von Siliziumdioxyd mit einem angenommenen Brechungsindex n = 1,46; ausgewählte Partikeldurchmesser (verschiedene Empfangswinkelbereiche);

    λ = 532nm; a: 4°-12,33°; b: 5°-12,33°; c: 6°-12,33°; d: 8°-12,33°; x = Partikeldurchmesser [μm]; y = Mie-Streulichtintensität [willk. Einheiten]

Abb. 13: Streulichtkurve von Siliziumdioxyd mit einem angenommenen Brechungsindex n = 1,47; ausgewählte Partikeldurchmesser (verschiedene Empfangswinkelbereiche); λ = 532nm; a: 4°-12,33°; b: 5°-12,33°; c: 6°-12,33°;

    d: 8°-12,33°; x = Partikeldurchmesser [μm]; y = Mie-Streulichtintensität [willk. Einheiten];

Abb. 14: Streulichtkurve von Siliziumdioxyd (Seitwärtsstreuung) mit angenommenen Brechungsindex a: n = 1,47 und b: n = 1,46; ausgewählter Partikeldurchmesserbereich;

λ = 532nm; halber Öffnungswinkel: 10,02°;

x = Partikeldurchmesser [μm];
y = Mie-Streulichtintensität [willk. Einheiten];

Abb. 15: Streulichtkurve von Siliziumdioxyd (Seitwärtsstreuung) mit angenommenen Brechungsindex a: n = 1,46 und b: n = 1,47; ausgewählter Partikeldurchmesserbereich; λ = 532nm; halber Öffnungswinkel: 10,02°;

x = Partikeldurchmesser [μm];
y = Mie-Streulichtintensität [willk. Einheiten];

Abb. 16: 2D-Plot: Brechungsindex als Funktion der Partikelgröße;
n = Brechungsindex; x = Partikelgröße

Abb. 17: 2D-Plot: Spärizität als Funktion des Brechungsindexes AI = Asphärizitätsindex; n = Brechnungsindex

Abb. 18: Streulichtintensitäten (Seitwärtsstreuung) von Siliziumdioxidpartikel in Luft a: n = 1,0 und in Wasser b: n = 1,335 dispergiert; Öffnungswinkel: 10,02°;

x = Partikeldurchmesser [μm];
y = Mie-Streulichtintensität [willk. Einheiten]

Abb. 19: Prinzipskizze der Messzone mit Partikel, gesehen in Richtung des Laserstrahls; die Strömungsrichtung der Teilchen wird durch den Pfeil angedeutet a) Volumenstreulichtgerät; b) Einzelteilchen-Streulichtphotometer mit Laserfokussierung und - formung ohne - und c) mit hydrodynamischer Fokussierung;

Abb. 20: Abblockung von Streulichtstrahlung durch eine Blende (dunkelgrauer Kreis); Laser-Primärstrahl mit Extinktionssignalen (hellgrauer Kreis) wird durch die Lochblende durchgelassen;

Abb. 21: Extinktionsmessung eines 552 nm - Polystyrenlatex (mit Untergrundkorrektur);

X = Kanalzahl am Vielkanalanalysator;
Y = Extinktion [willk. Einheiten];

Abb.22: Extinktion einer Mischung von Polystyren-(PS) und Melaminharzpartikeln (MF)unterschiedlicher Größe a: 0,815 μm PS; b: 1,05 μm PS; c: 1,3 μm MF;

X = Kanalzahl am Vielkanalanalysator;
Y = Extinktion [willk. Einheiten].

Beschreibung der Erfindung

1. Messapparatur des Einzelteilchenphotometers

Die technische Realisierung der Erfindung soll im Folgenden beispielhaft erläutert werden.

Optischer Messaufbau:

Abb. 1a zeigt einen typischen Aufbau der Messapparatur mit Fokus auf die Optik in der Draufsicht (z-Richtung). Die erfindungsgemäße Vorrichtung umfasst mindestens einen Laser 1 zur Erzeugung mindestens eines Laserstrahls 3,

mindestens ein optisches Eingangsmodul 2, z.B. zur Formung des Laserstrahls 3 und Gestaltung einer Fokusgeometrie 16 (Abb. 1b) oder ähnlich), eine Flowcell 5, vorteilhaft mit hydrodynamischer Fokussierung, in welcher durch den Laserstrahl 3 Forwardstreulichtstrahlung 6 und Sidewardstreulichtstrahlung 7 erzeugt wird, optische Ausgangsmodule 8 im Forwardstreulichtstrahl 6 und optische Ausgangsmodule 9 im Sidewardstreulichtstrahl 7, halbdurchlässige Spiegel 10,
Kameras 12, Photomultiplier 11a, 11b, wobei mittels der Photomultiplier 11a, 11b Streulichtmessungen für eine unterschiedliche Zahl von Öffnungs- bzw. Empfangswinkeln durchgeführt werden und aus den ermittelten Streulichtintensitäten des Forwardstreulichtstrahls 6 und des Sidewardstreulichtstrahls 7 Partikelmerkmale über Auswertealgorithmen ermittelt werden.

Die Lichtquelle 1 ist idealerweise ein stabiler monochromatischer, intensitätssteuerbarer und kurzwelliger Laser mit einer Leistung von z.B. 100 mW. Andere Lichtquellen und Ausgestaltungen sind ebenfalls einsetzbar. Erfindungsgemäß können alle Wellenlängen des sichtbaren und nahen UV- und IR-Bereiches eingesetzt werden. Je kleiner die Wellenlängen, je kleinere Teilchen können vermessen werden. Die Einkopplung unterschiedlicher oder mehrerer Laser ist ebenfalls über das optische Modul 2 oder mittels entsprechender optischer Bauelemente über den Lichtstrahl 3 möglich. Das optische Modul 2 dient zur Gestaltung einer z.B. ellipsenförmigen Fokusgeometrie (16 in Abb. 1b), welche sowohl einer gleichen Lichtintensität im Messvolumen als auch einer geringen Koinzidenz der Partikel Rechnung trägt. Beide Mittel können auch in einem Modul integriert werden. Der inzidente bzw. die Streustrahlen können auch durch Lichtleiter "geführt" werden, was z.B. bezüglich der Miniaturisierung des Aufbaus von Nutzen ist. Besonders vorteilhaft ist der Einsatz von mikrooptischen Bauteilen. Der einfallende Lichtstrahl 3 ist auf den Einzelpartikelstrom 4 in der Flowcell 5 fokussiert.

Zu beachten ist, dass die Ränder der Messzelle nicht von relevanten Anteilen der Primärstrahlung getroffen werden, um die Untergrundstrahlung zu minimieren.

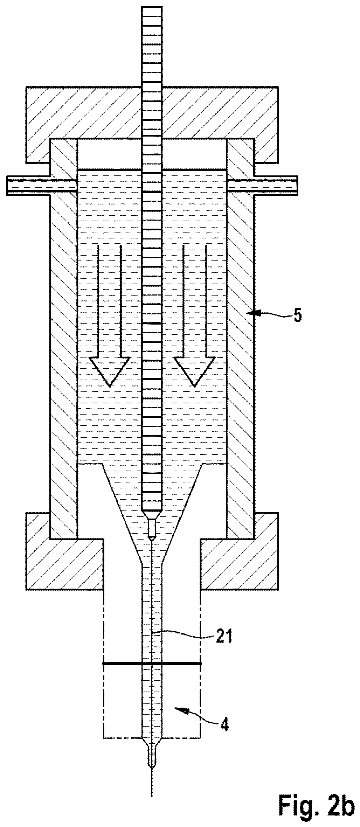

Abb. 1b zeigt die Verhältnisse als Ausschnitt gesehen von der Seitwardsstreuung 7 (y-Richtung). Die Fokusgeometrie ist typischerweise so zu wählen, dass ihre Breite (x) größer als der Durchmesser des Partikelstroms ist. Dies kann z.B. durch eine Kombination entsprechender Linsen im Modul 2 und/oder den Einsatz von Blenden realisiert werden. Der Fokus ist weiterhin mittels des optischen Moduls 2 so zu gestalten, dass die Laserintensität über den Querschnitt des Partikelstrom (y-Richtung) möglichst homogen (konstant) im optischen Messvolumen (optical sensing zone) ist. Sollte dies nicht gegeben sein, kann durch eine Vermessung der ortsabhängigen Laserintensität oder durch eine Normierungsmessung mit sehr monodispersen Partikeln die Abweichung vermessen werden. Die Partikelgrößenverteilung kann mittels der ermittelten örtlichen Intensitätsabhängigkeit durch Korrekturfaktoren und der Annahme statistisch homogen verteilter Partikel im Strompfad 21, Abb. 2b korrigiert werden.

Beim Durchtritt eines Partikels durch den Laserfokus wird das Licht in den Raum gestreut. Beispielhaft sind die optischen Module 8 und 9 für die Forward- 6 und Sidewardstreuung 7 für ein sich im Laserfokus befindendes Teilchen eingezeichnet. Sie sammeln das Licht, blenden den Direktstrahl (z.B. durch beam stop) aus (nur 6), enthalten die Empfangsoptik und fokussieren das in einem bestimmten Bereich gestreute Licht auf z.B. Photomultiplier 11a, 11b. Je nach den Messanforderungen können letztere identisch oder für die unterschiedlichen Strahlungswinkel funktionsangepasst sein. Der Einsatz von z.B. Photodioden und Avalanchedioden (Lawinenphotodiode) ist ebenfalls möglich. Die halbdurchlässigen Spiegel 10 erleichtern mittels Kameras 12 das Justieren der Strahlengänge. Mit der Kamera wird das Bild des streuenden Teilchenstroms in der Messzone nach Schärfe und deren Lage zur Lochblende beurteilt. Nur wenn die Ränder der Lochblende und die Streulichtsignale "scharf" erscheinen, kann das Bild des Messvolumens durch eine möglichst kleine Blende eingeengt werden. Damit wird ein Teil der Untergrundstrahlung ausgeblendet. Außerdem ist zu gewährleisten, dass die Blende kein Teil des Bildes von der Teilchenstreuung verdeckt, um eine dadurch bedingte Verbreiterung der TGV und Fehler in der Teilchenkonzentration zu vermeiden.

Erfindungsgemäß können im Vorward-Streustrahl 6 gleiche oder unterschiedliche geformte "beam stops" (z.B. mit unterschiedlichen Durchmessern) nacheinander eingefügt werden - vor oder nach der Empfangsoptik (Objektiv) - oder eine Blende konstanter Größe kann in dem divergierenden Streulichtkegel (oder fokussierenden Kegel) verschoben werden, um so verschiedene Empfangswinkelbereiche zu realisieren. Es können auch ringförmige Detektoren, die jeweils einen differentiellen Winkelbereich abdecken, kombiniert werden. Ringdetektoren mit unterschiedlichen Radien und beam stops können auch z.B. in einem Bauelement in vier Quadranten mit zugeordneten Strahlungsempfängern angeordnet sein. Dadurch entfallen die mechanischen Platzierungen z.B. der "beam stops" für die Realisierung unterschiedliche Empfangswinkel.

Essentiell für eine hohe Zählgenauigkeit ist der Durchtritt jeweils nur eines Partikels durch das vom fokussierten Laserbeam erfasste Messvolumen. Dies ist praktischerweise für flüssigkeitsgetragene Partikel durch hydrodynamische bzw. für luftgetragene Partikel durch aerodynamische Fokussierung der Messprobe erreichbar. Der maximale Probenvolumenstrom in Abhängigkeit von der Partikelkonzentration läßt sich über einen Ansatz aus der Literatur (Analytical Chemistry 1987 59 (6), 846-850, DOI: 10.1021/ac00133a013) abschätzen.

Abb. 2a zeigt eine typische Strömungsanordnung (Fluidik) mit einer vertikal ausgerichteten Flowcell 5 mit hydrodynamischer Fokussierung. Die Flowcell 5 ist typischerweise quaderförmig ausgebildet (Außenmasse z.B. 10mm x 10 mm, Höhe z.B. 30 mm, andere Abmessungen sind ebenfalls möglich) und besteht aus hochtransparentem Material (z.B. Quarzglas). Der innere Querschnitt beträgt z.B. 1500 $\mu$m x 1500 $\mu$m oder 200 $\mu$m x 200 $\mu$m. Andere Geometrien und Querschnitte sind ebenfalls einsetzbar. Die Flowcell 5 besitzt weiterhin einen Zufluss für den Sheath Flow (Hüllstrom) 13 und den Probenzufluss 14 sowie den Abfluss 15. Der Sheath Flow 13 wird aus einem Reservoir 17 über eine Druckerzeugungsvorrichtung 18 kontrolliert und pulsationsfrei gefördert. Dies wird z.B. durch eine einstellbare gravimetrische erzeugte Druckdifferenz realisiert. Zur Stabilisierung einer laminaren Strömung können spezielle Geometrien im Zuflussbereich 13, 5 zum Einsatz kommen. Der Probenstrom 19 wird über eine volumengesteuerte, kalibrierbare Spritzenpumpe 20, z.B. mit einem Nennvolumen von 0,5 ml - 2 ml, vorgelegt. Größere und kleinere Fördervolumina sind ebenfalls einsetzbar. Es sei unterstrichen, dass damit alle dispergierten Teilchen, welche die Messzelle durchströmen analysiert werden und nicht nur ein geringer Prozentsatz, wie in EP2 388 569 A1 angegeben. Um die Probenmenge z.B auf 80 $\mu$L oder 400 $\mu$L, vorzugsweise 250 $\mu$L, zu minimieren, kann in der Zuleitung 14 ein zusätzlicher Port z.B. für Hamiltonspritzen unterschiedlicher Volumina und ein entsprechend dimensionierter Probenloop integriert werden. Der Querschnitt des Strompfads 21 in der Flowcell 5 (Abb.2b) kann über das Verhältnis Sheath- zu Probenflow über weite Grenzen manuell oder automatisch auf der Grundlage bekannter bzw. zu Beginn des Experiments erhobener Zählwerte der Probe eingestellt werden (z.B. kann der Durchmesser des Probenstroms (4, Abb. 1b) von 5 $\mu$m bis zu 30 $\mu$m Durchmesser veränderlich eingestellt werden.

Nach einem Ansatz aus der Literatur (Analytical Chemistry 1987 59 (6), 846-850 ,DOI: 10.1021/ac00133a013) lässt sich der Probenstromdurchmesser in Abhängigkeit der zwei Flussraten für Sheath- und Probenflow berechnen. Das geometrische optische Messvolumen beträgt damit z.B. bei einer Laserstrahlhöhe von 15 $\mu$m (kleiner Radius des exemplarisch elliptisch angenommenen Strahlquerschnitt (16)) und einem Probenfluss in der Messzelle von z.B. 0,3 $\mu$L oder 1,2 $\mu$l jeweils 10 pL bzw. 295 pL. Diese Werte können erfindungsgemäß durch die variable Fluidik sowohl auf kleinere, z.B. zur Verschiebung der der Messsensitivität für kleinere Nanoteilchen, als auch größere Volumina, z.B. zur Messzeitverringerung angepasst werden. Damit können Ausgangskonzentrationen der Proben in einem z.B. 10.000-fachen Konzentrationsbereich lediglich durch geeignete Strömungsgeschwindigkeiten des Proben- und/oder des Sheathflows und ohne Verdünnung und Änderung der mechanischen Anordnung bzw. der Flowcell-Geometrie aufgabengemäß vermessen werden. Bei z.B. Probenstromflussraten von (300 -1200) nL/min und Konzentrationen von $10^9$ Teilchen pro Milliliter ist es möglich praktisch koinzidenzfrei zu messen und die Partikelzahl sehr genau mit einem relativen Fehler unter 1% zu erheben. Damit sind typischerweise z.B. Proben mit einer Partikelkonzentration von mindestens bis zu $10^9$ Partikeln pro mL durch Einzelpartikeldetektion zu analysierbar. Um den notwendigen breiten Größenmessbereich über 3-4 Dekaden zu realisieren, wird die Flowzelle 5 und die Fluidik konstruktiv so konzipiert und realisiert, dass die Zuführung des Sheath Flow 13 und die Probenzuführung 14 von oben oder von unten möglich sind. Damit werden Zählverluste durch Sedimentation größerer Teilchen bzw. Aufrahmung größerer Tröpfchen verhindert. Zusätzlich oder anstelle ist auch der Einsatz von Vorrichtungen, wie ein oder mehrere Mischer, im Probenzuleitungssystem möglich, um die Probe ohne Teilchenverluste der Flowcell 5 zuzuführen.

An Stelle einer hydrodynamischen Fokussierung ist auch eine akustische Zentralisierung im Messvolumen 4 der Partikel in der Mitte der Flowzelle 5 möglich.

Durch spezielle Vorrichtungen zur sequentiellen Probenname aus Reaktoren oder Rohrleitungen und Zuführung über 14 ist auch quasi eine zeitlich kontinuierliche Vermessung von z.B. Produktionsprozessen (online) möglich. Vorteilhaft ist, durch optische Sensoren oder andere geeignete Messfühler die primäre Ausgangsteilchenkonzentration zu überprüfen und bei zu hohen Ausgangskonzentrationen der dem Prozess entnommenen Primärprobe über kalibrierbare Mischer ein oder mehrere Verdünnungsschritte zu realisieren und diese in das Gesamtmesssystem sowohl technisch als auch in die Standard Operational Procedures (SOPs) z.B. softwaregestützt über eine entsprechende Software (z.B. SEPView) zu integrieren und in die Concentrationsberechnungen einzubeziehen.

Der einfallende Laserstrahl 3 transmittiert die Flowcell 5 und wechselwirkt mit den hydrodynamisch oder aerodynamisch vereinzelten Partikeln im Probenstrom 21. Die Streustrahlung (z.B. Forward 6 und Sideward 7) tritt aus der Flowzell 5 aus. Prinzipiell ist auch der Einsatz von z.B. zwei unterschiedlichen Lasern mit parallelen oder z.B. um 90 ° versetzten Einfallstrahlen 3 möglich, um die Messauflösung für einzelne Applikationen zu verbessern. Praktischerweise ist bei parallelen Einfallsstrahlen 3 der Höhenunterschied bzgl. der Flowcell 5 sehr gering, ohne dass es jedoch zu Wechselwirkungen der beiden Strahlen kommt. Die Intensitäts-Zeit-Verläufe der mit den zwei Lasern aufgenommenen Streuevents sind entsprechend zu synchronisieren.

Der Aufbau der aerodynamischen Fokussierung ist ähnlich der hydrodynamischen. Der Aerosolstrahl wird von einem Reinluftmantel umgeben und durch das Verhältnis von Probenvolumenstrom und Hüllstromvolumen des Luftmantels sowie die Form der Ansaugdüse in der Flowcell 5 eingeschnürt.

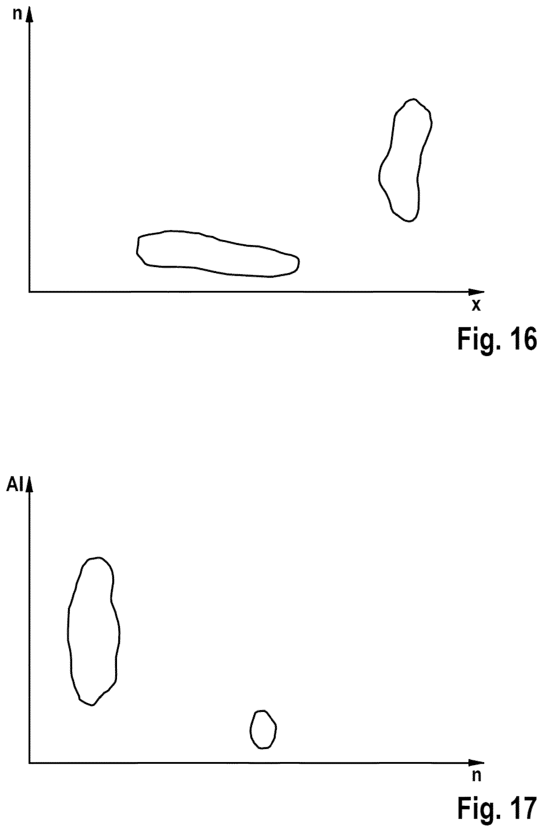

Die Erfindung zeichnet sich infolge eines nichtsphärisch ausgeformten Laserstrahls (16, Abb. 1b) durch eine sehr geringe Intensitätsabhängigkeit über den Querschnitt des Strahls im Vergleich zur typischerweise auftretenden Gaußverteilung eines sphärisch fokussierten Laserstrahls (siehe EP 2388569 A1) aus. In dem exemplarisch in Abb. 16 dargestellten elliptischen Strahlquerschnitt, kann durch ein großes Achsenverhältnis eine hinreichend homogene Laserintensität über den optischen Messbereich erzielt werden. Andererseits kann durch Simulationsrechnungen der optischen Verhältnisse bei einer bekannte Intensitätsverteilung des Primärstrahls des Laser 1 oder basierend auf einer experimentellen Bestimmung der Intensitätsverteilung im erfassten Messtrom der Fehler z.B. durch Integration über den messbaren Bereich und Bestimmung der Abweichungsfaktoren von einer konstanten Intensitätsverteilung die technisch realisierte Intensitätskurve korrigiert und damit präzise Korngrößenverteilungen gewonnen werden.

Für die Ausweitung der Empfindlichkeit des Messsystems in den unteren Nanobereich, sind insbesondere das optische Messvolumen zu verringern und die Streustrahlung von Bauteilflächen im optischen Bereich zu minimieren und ein noisearmer Laser 1 einzusetzen. Ein gekapselter Lasermodul (1,2) mit integrierter Mikrooptik und minimiertem Austrittsfenster ermöglicht eine deutliche Reduzierung unerwünschter Streustrahlung.

Auch im Bereich der Flowcell 5 sowie Streustrahldetektionsoptik werden erfindungsgemäße Lösungen zur Verbesserung des Rausch-Signal-Verhältnis eingesetzt. In der Flowcell 5 sind z.B. nur die notwendigen Eintritts- bzw. Austrittsfenster für die Strahlung transparent zu gestalten. Dies kann z.B. durch den Einsatz unterschiedlich transparenter Gläser oder teilgecoater Innenwände realisiert werden. Auch im Bereich der Detektionsoptik (z.B. 8, 9, 10, 11a und 11b) sind zusätzliche optische Bauelemente, wie z.B. Multilevel diffractive optical elements, oder absorbierende Coatings, z.B. Vantablack® einsetzbar.

Elektronischer Aufbau:

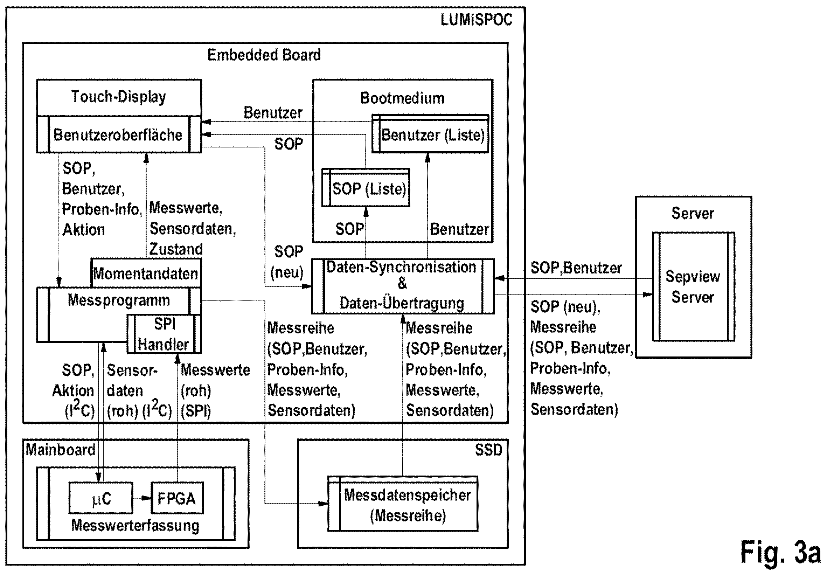

Abb. 3a gibt einen Überblick über die Hauptfunktionselemente des erfindungsgemäß entwickelten elektronischen Aufbaus basierend auf einem embedded Board mit Betriebsoberfläche BO, Bootmedien, mindestens einem Mikro-Controller unterstützt von einem oder mehreren FPGA(s) sowie schnellen Massenspeichern (z.B. SSD). Die Abb. 3a spiegelt auch die Grundprinzipien der Vernetzung und den Informationsfluss zwischen der PC- oder server-basierten Software SEPView und den elektronischen Aufbau wider, welche eine real time Kommunikation mit hoher Geschwindigkeit in beide Richtungen ermöglicht.

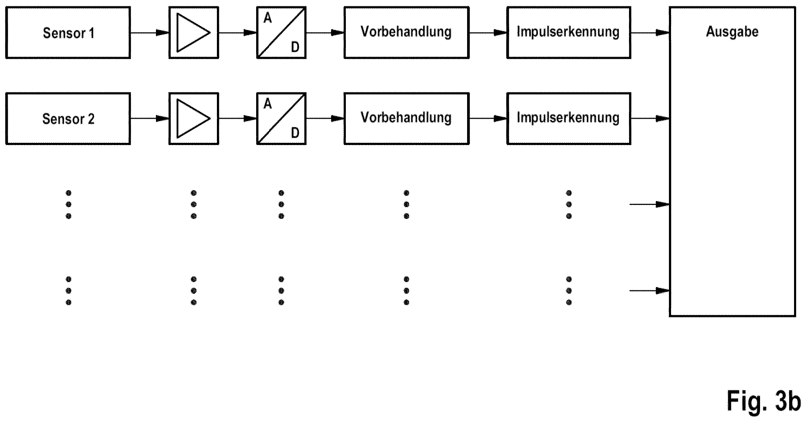

Die wesentlichsten elektronischen informationsverarbeitenden Komponenten sind in Abb. 3b exemplarisch schematisch für z.B. zwei Streulichtsensoren dargestellt, welche sich im Streuwinkel oder Öffnungswinkel unterscheiden können. Der Einsatz weiterer Sensoren, z.B. auch für Temperatur, Flussraten, Füllstand der Vorratsgefäße, Laserintensität, optische Justage, Kameras etc. ist sinnvollerweise ebenfalls vorzusehen.

Die von den Sensoren gelieferten analogen Signale der von den Einzelpartikeln ausgehenden Intensitätsimpulse werden zunächst durch einen rauscharmen, vorteilhaft linearen zweistufigen Verstärker mit automatischer Umschaltung verstärkt und dann durch Analog - Digitalwandler in real-time digitalisiert. Entsprechend der mit der Partikelgröße sehr stark abnehmenden Streuintensität sind sehr breitbandige Verstärker von z.B. 120 dB einzusetzen. Diese sind so auszulegen, dass registrierte Streuereignisse der Sensoren mit sehr variabler Häufigkeit (Taktfrequnz) z.B. von 20 Hz bis zu 10 kHz, vorteilhaft bis zu sehr hohen Häufigkeiten im Bereich von 50 - 100 kHz verarbeitet werden können, um in kurzer Messzeit einmal statistisch sichere Zählereignisse (Anzahl der Partikeln der jeweiligen Größenklassen, z.B. von 80 nm bis 100 nm), erheben zu können und andererseits auch Veränderungen der Probe während der Messzeit z.B. durch Sedimentation oder Partikel-Wand-Kontakt besonders für Konzentrationsbestimmungen auszuschließen. Andererseits können damit auch schnelle Veränderungen der dispergierten Phase, z.B. Lösungsverhalten oder Agglomerationsgeschwindigkeiten gemessen werden. Die für die Erfindung entwickelten Verstärker können sowohl im linearen Mode (für hochaufgelöste Impulse bzw. monomodale Partikel) als auch im logarithmischen Mode (breite Verteilungen über mehrere Größenordnungen) betrieben werden. Um die für die Impulsauswertung hohe Auflösung zu realisieren, sind AD-Wandler mit z.B. 20 bis 24 bit und einer Samplingratenbereich von 0,1 bis 25 MS/s, vorteilhaft 1-5 MS/s einzusetzen.

In der Vorbehandlung der digitalen Werte werden sehr kurze Störimpulse und ungültige Wandlerergebnisse durch spezielle Algorithmen ausgefiltert und verworfen. Eine Offsetbehandlung ist hier ebenfalls zu realisieren.

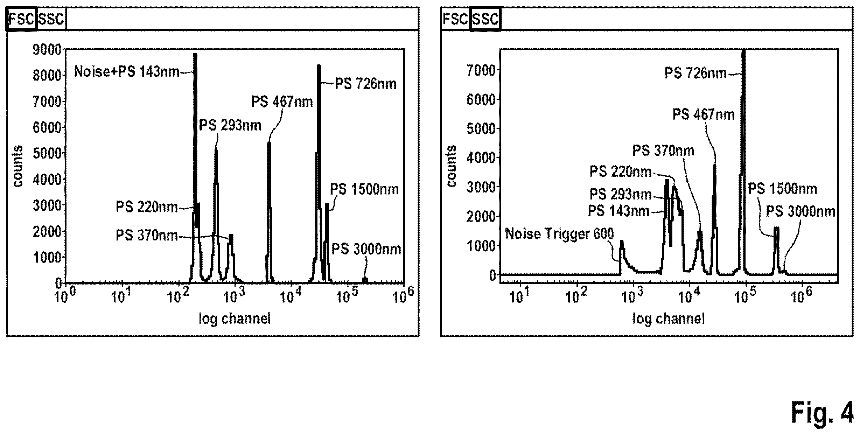

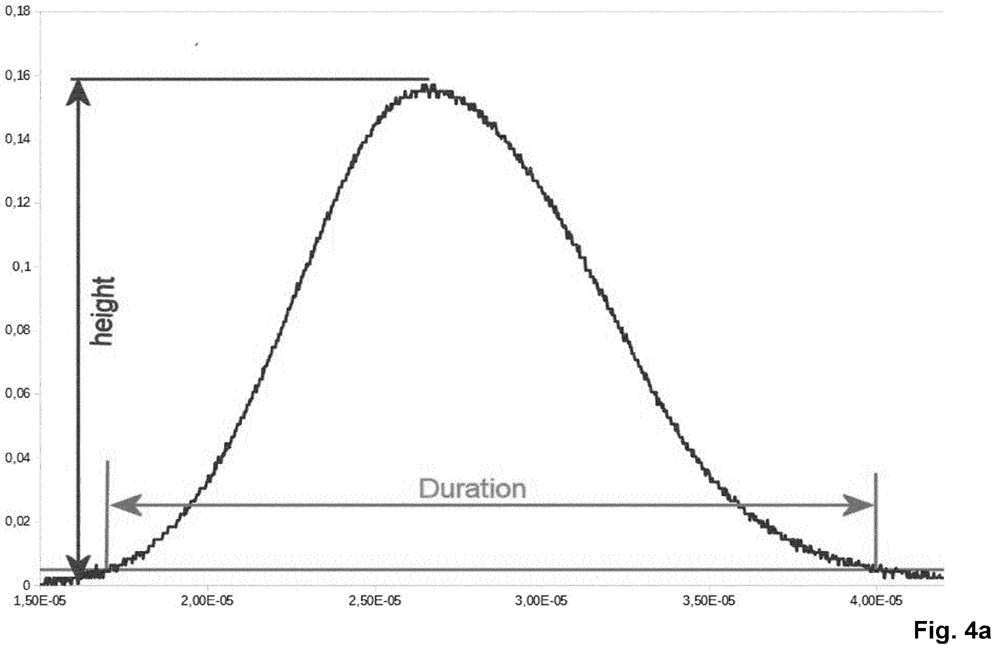

Eine spezielle Impulserkennungselektronik/-Firmware wertet in Echtzeit den digitalisierten Datenstrom aus und identifiziert auswertbare Impulse. Ungültige Impulse werden verworfen. Zu den ungültigen Daten gehören u.a. zu lange Impulse, zu kurze Impulse oder Impulse unterhalb der Triggerschwelle. Nach Digitalisierung von gültigen Impulsen werden in real time Kennwerte des Impulses des jeweiligen Einzelpartikels, wie z.B. Maximum des Impulses, Intensität (Abb. 4a), Dauer des Impulses und Fläche unter dem Impulssignal für jedes Partikel im FPGA bestimmt. Der digitalisierte Impuls mit z.B. 100 Stützstellen inklusive eines einstellbaren zeitlichen Vorlaufs sowie die ermittelten Kenngrößen werden abgespeichert oder in real time an das embedded Board übergeben und in bis zu $10^6$ Bins hochsensitiv klassifiziert. Über die BO kann die Anzahl der Bins vorteilhaft zwischen z.B 10 und $10^6$ gewählt und damit Partikelklassen beliebig zusammengefasst werden. Die Impulsklassifikation wird auf der BO in real time zur Anzeige gebracht. Zusätzliche unterstützende Elektronik stellt die Parameter für die Impulserkennung und die Sensoreinstellung bereit. Diese SOP-Parameter werden vom SEPView-Server abgefordert oder über die BO erstellt und vom embedded Board an die Elektronik übergeben. Alle Datenströme von den unterschiedlichen Sensoren tragen Zeitstempel und erlauben die Synchronisation bzgl. der Visualisierung und Analyse.

Software:

SEPView® besteht aus insgesamt drei funktionellen Software-Komponenten. Die erste integrale Komponente von SEPView® ist ein plattformunabhängiger Applikationsserver, der mit dem oben beschriebenen Messgerät kommuniziert. Die Kommunikation erfolgt mittels eines eigens entwickelten Kommunikationsprotokolls, welches erfindungsgemäß einer parallelen Dateneingabe und SOP-Programmierung/Änderung sowohl über den Server als auch direkt über die BO durch den embedded Rechner des Messgerätes ermöglicht. Zentraler Bestandteil des SEPView®-Server ist eine dokumentenbasierte Datenbank in der die vollständigen Stamm- und Bewegungsdaten von SEPView® persistent gespeichert werden.

Die zweite integrale Komponente von SEPView® ist der SEPView®-Explorer, der die Schnittstelle zum Benutzer abbildet und vorteilhaft als plattformunabhängige Web-Oberfläche realisiert ist. Durch die Verwendung des Web-Browsers werden umfangreiche Datenvisualisierungen, z.B. Streulichteinzelimpulse als auch die Klassifizierung der unterschiedlichen erhobenen Partikelparameter unter Einbeziehung des Grafikprozessor realisiert, in Real-Time während der Messung analysiert und auf der BO dargestellt. Der Zugriff auf den SEPView®-Explorer erfolgt ausschließlich autorisiert.

Die dritte Komponente ist der SEPView®-Recorder. Er wird aus dem SEPView®-Explorer gestartet, steuert die gesamte Messung entsprechend der vom Nutzer z.B. vom Server übernommenen SOP oder über die BO eigens programmierte SOP, visualisiert die synchronisierten Streulichtimpulse z.B. für verschiedene Öffnungswinkel oder Streulichtrichtungen sowie spezifizierte Messparameter in Echtzeit und zeichnet die abgearbeitete SOP, alle Funktionszustände und die Messdaten auf. Durch die Client-Server-Architektur wird die administrative, die prozessuale und die analytische Ebene voneinander entkoppelt und kann auf diese Weise an die jeweiligen Kundenprozesse angepasst werden und ermöglicht ein verteiltes Zusammenarbeiten.

Abb.4 zeigt typische Ergebnisse der simultanen Registrierung der Einzelpartikelstreuung in Vorwärts- (links) und Seitwärtsrichtung (rechts) für einen Mix von monomodalen Partikeltypen (Material: Polystyren) mit einem nominalen Durchmesserbereich von 143 nm bis 3000 nm (logarithmische Darstellung). Erfindungsgemäß wurden die unterschiedlich großen Partikel der Mischprobe mit identischer SOP simultan sowie ohne jegliche Änderung/Anpassung der Messkammergeometrie vermessen. Für eine verbesserte Analyse werden z.B. die Forward- und Sidewardstreuung auch als 2-dimensionaler Plot dargestellt (Achsen: Forward (Y-Achse) gegen Sideward (X-Achse) oder vice versa). Jedes Teilchen entspricht dann einem Punkt in der Grafik, welcher die gemessenen Intensitäten in den ausgewählten Streu- bzw. Extinktionskanälen quantifiziert. Die Punktdichte entspricht der jeweiligen Anzahl der Teilchen mit diesen Merkmalen. Damit ist vorteilhaft auch die Detektion von gleichgroßen Partikeln unterschiedlicher Materialien als auch beschichteter bzw. nichtbeschichteter Teilchen möglich.

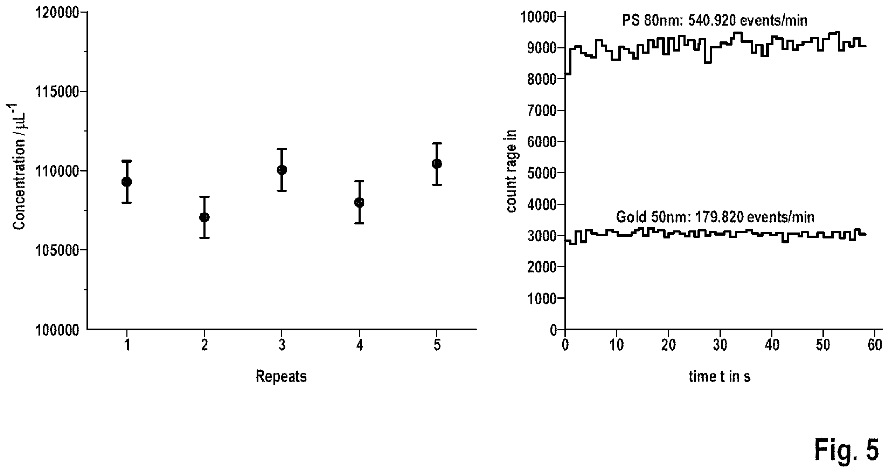

Abb.5 (links) zeigt die Ergebnisse für die Bestimmung der Konzentration von Polystyrenpartikel einer Größe von 726 nm. Dargestellt sind die Mittelwerte mit Standardabweichung für fünf Wiederholungen (Messzeit jeweils 1 Minute). Die mittlere Konzentration beträgt 108.960 +/- 640 Partikel pro Mikroliter. Die Standardabweichung beträgt lediglich 0,6% und belegt die hohe Zählstabilität des entwickelten Verfahrens. Abb.5 (rechts) zeigt die reine Zählrate von Polystyrene- (80 nm) und Nanogoldteilchen (50 nm). Wie ersichtlich, ermöglicht die erfinderische Lösung selbst bei einer sehr hohen Zählrate von im Beispiel ca. 9000 Hz (events/s) die Registrierung eines konstanten, driftfreien Zählwertes über die Messzeit (im Abbildungsbeispiel eine Minute). Damit ermöglicht das vorgeschlagene Verfahren nach Kalibrierung der die Messprobe befördernden Spritzenpumpe eine sehr effektive Konzentrationsbestimmung (Partikel pro mL) von mikroskaligen und auch insbesondere nanoskaligen dispergierten Partikeln.

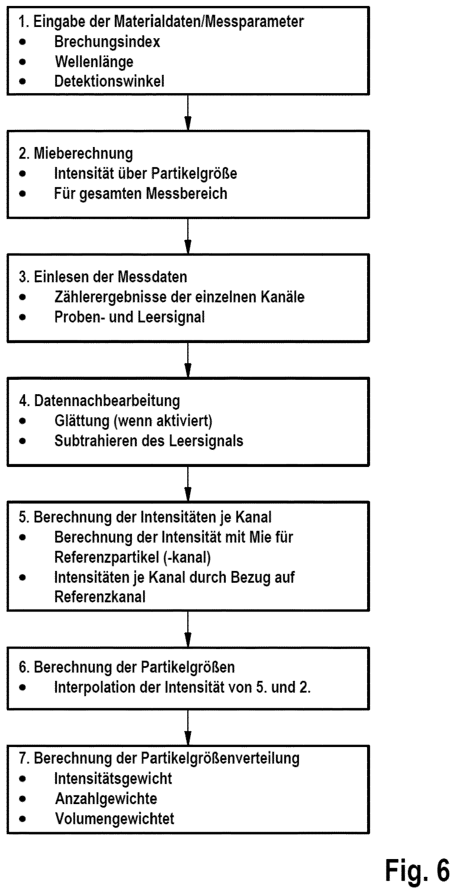

Abb.6 zeigt eine Möglichkeit der Abfolge der Analyseschritte einer nachgelagerten Analyse einer Probenmessung mit dem Ziel der Partikelparameterberechnung (hier z.B. Korngröße) mit dem erfindungsgemäßen Messverfahren.

2. Ausführungsbeispiele

Im Folgenden werden einzelne Ausführungsbeispiele der erfinderischen Lösung für die Bestimmung von Partikelkenngrößen exemplarisch vorgestellt und näher erläutert. Alle folgenden Berechnungen beziehen sich beispielhaft auf eine Laserwellenlänge von 532 nm. Andere Wellenlängen, z.B. im NIR, SL oder UV, sind ebenfalls einsetzbar und ermöglichen die Verbesserung der Auflösung/Sensitivität oder des dynamischen Messbereichs für ausgewählte Anwendungsfälle. So ermöglicht die Verringerung der Wellenlänge kleinere Partikel und eine Vergrößerung der Wellenlänge größere Partikel zu detektieren, ohne in die mehrdeutigen Gebiete der Mie-Theorie zu gelangen. Die Partikel sind typischerweise in Wasser dispergiert. In Abhängigkeit von den für die Fluidik eingesetzten Materialien sowie den optischen Anforderungen können jedoch auch beliebige Flüssigkeiten, Lösungen, Lösungsmittel etc. oder Gase als Trägermedium zum Einsatz kommen. Für bestimmte Anwendungsfälle kann durch die Wahl der Flüssigkeiten der Brechungsindexkontrast z.B. erhöht werden und damit die Detektion von Nanoteilchen in den einstelligen Nanometerbereich verschoben oder die Auflösung für Partikeln mit sehr geringen Größendifferenzen (z.B. < 5 nm) ermöglicht werden.

Die für die Beschreibung der Erfindung notwendigen Streulichtkurven sind für die Beispielteilchen nach der Mie-Theorie berechnet. Die Rechnungen werden bei einem Teilchendurchmesser von 10 $\mu$m abgebrochen, da dieser Größenbereich hinreichend ist, um erfindungsgemäße Sachverhalte zu erläutern. Die nach Zahl und Winkelbereich gewählten Empfangswinkel für die Streulichtmessungen sind willkürlich gewählt und lassen sich beliebig anpassen. 10,33° ist der obere feste Grenzwinkel z.B. eines nichtkommerziellen Photometers, der der Einfachheit halber benutzt wird.

Für die unteren variablen Empfangswinkelbegrenzungen sind für die Beispielberechnungen vier Winkel ausgewählt. $\varphi$ = 4°, 5°, 6° und 8°, so dass die Winkelbereiche zwischen $\varphi$ und 10,33° nach Bedarf für die Auswertung herangezogen werden können. Es sei unterstrichen, dass diese Winkel sehr variable festgelegt werden können. Bei entsprechender optischer Anordnung kann auch der untere Grenzwinkel unter 1° betragen.

a) Vergrößerung des Anwendungsbereiches von

Streulichtmessungen für die Größenbestimmung mikroskaliger Teilchen bei bekanntem Brechungsindex.

"Normalerweise" wird zur Größenbestimmungen von Teilchen, die aus dem Rayleigh-Streubereich herausfallen, die sogenannte Vorwärtsstreuung benutzt, und die Intensität in einem bestimmten Winkelbereich gemessen. Da die Streulichtintensität als Funktion der Teilchengröße zuerst monoton anwächst, jedoch für größere Teilchen Maxima und Minima aufweist (Abb. 7 - 13), und damit keine eineindeutige Zuordnung zur Partikelgröße zulässt, ist eine eindeutige Bestimmung der Größe in Abhängigkeit von deren optischen Eigenschaften für Dispersionen für Größenklassen ab wenigen Mikrometern nicht möglich.

Wie Abb.7 belegt, kann die Partikelgröße oft benutzter Referenzpartikel (Polystyren) bei z.B. einem Öffnungswinkel von 4°-10,33° nur bis zu einem Durchmesser von 1,17 $\mu$m eindeutig bestimmt werden Die Streulichtintensität in Abb.7 liegt dann bei I = 1,2. Bei einer geringfügig höheren Streulichtintensität ist auch ein Teilchendurchmesser von 2,36 $\mu$m nach Mie möglich. Erfindungsgemäß wird diese Vieldeutigkeit durch Messungen in mehreren Winkelbereichen aufgehoben (Abb.8).

Bei einer Streulichtintensität z.B. von I = 2 sind im Winkelbereich 4°-12,33° nach Abb.8 die Partikelgrößen 1,20 $\mu$m, 2,05 $\mu$m und 2,63 $\mu$m ablesbar. Um die Vieldeutigkeit aufzulösen, kann z.B. der Winkelbereich 6°-12,33° für eine zusätzliche Messung genutzt werden (Abb.8), um die reale Größe des Partikels zu bestimmen. In diesem Winkelbereich liegen die Streuintensitäten basierend auf Mie-Berechnungen für die im Winkelbereich 4°-12,33° ermittelten möglichen Partikelgrößen bei 1,59(1,20$\mu$m), 1,04(2,05$\mu$m) bzw. 1,34(2,63$\mu$m). Die Intensitätsunterschiede sind hinreichend groß, demnach kann dem Partikel ein eindeutiger (richtiger) Durchmesser zugeordnet werden. Wird im Experiment für den zweiten Winkelbereich eine Intensität von z.B. 1,04 gemessen, beträgt die Partikelgröße 2,05 $\mu$m. Falls die für den zweiten Winkelbereich ermittelten Intensitäten nicht mit den Berechnungen übereinstimmen, liegt die Vermutung nahe, dass das beobachtete Teilchen asphärisch ist. Eine genaue Vermessung und Auswertung der Impulsform kann dieses optische Partikelmerkmal quantifizieren. Neben der Rayleigh-Debye-Ganz-Theorie (gilt nur für eine begrenzte Anwendung) können auch andere Theorien, die die Asphärizität behandeln (z.B. diskrete Dipolnäherung), benutzt werden, um konkrete quantitative Parameter zu erhalten.

Ähnlich kann nach einer Messung im Winkelbereiche 4°-12,33° im Teilchengrößenbereich 4,0 $\mu$m - 5,0 $\mu$m verfahren werden. Hier bietet sich eine Kombination der Winkelbereiche 6°-12,33° und 8°-12,33° an. Die ebenfalls mögliche Teilchengröße von 5,9 $\mu$m wird durch die letztere Kurve entschieden. Hier müsste die gemessene Intensität bei 3 liegen, wenn das Partikel diesen Durchmesser besitzt.

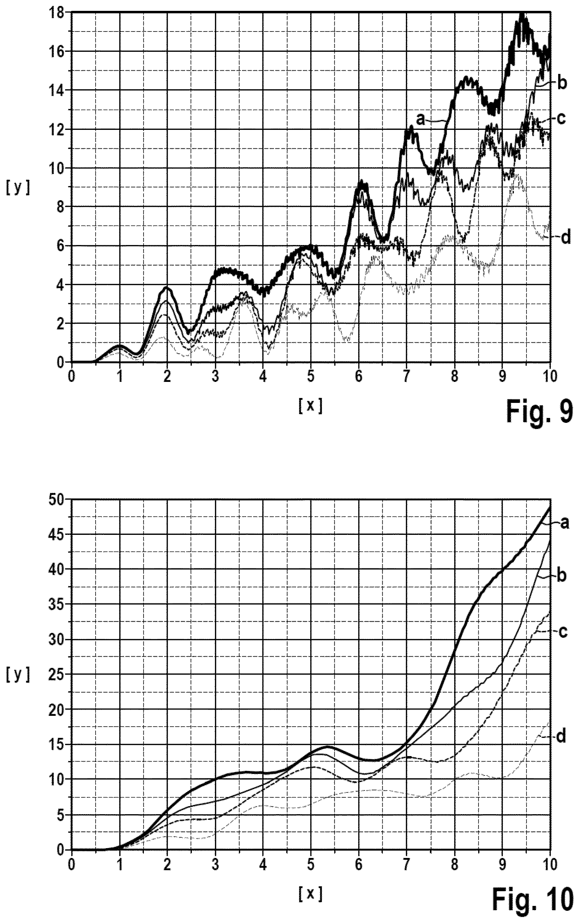

Als weiteres Beispiel soll eine Streulichtintensität von I = 14 bei einer Dispersion mit Partikel mit dem Brechungsindex 1,8 untersucht werden (Abb.9).

Im Winkelbereich 4°-12,33° liegen die möglichen Partikeldurchmesser bei 8,1 $\mu$m, 8,5 $\mu$m und 9,0 $\mu$m. Um die Vieldeutigkeit zu eliminieren muss erfindungsgemäß in einem zweiten Winkelbereich gemessen werden. Im Winkelbereich 6°-12,33° liegen die entsprechenden Intensitäten bei 6,6, 9,5 und 10,1. Wenn die Differenz 9,5 und 10,1 nicht ausreichend für eine Bestimmung erscheint, kann der Winkelbereich 8°-12,33° benutzt werden. Hier liegen die Intensitäten bei 4,8 und 7,1.

Aus den Beispielen ist auch ersichtlich, dass aus den theoretischen Mie-Berechnungen erkannt werden kann, welche Winkelbereiche nach einer ersten Messung zur experimentellen Entscheidung noch herangezogen werden können.

Außerdem ist gut erkennbar, dass bei Teilchen mit einem Durchmesser größer 10 $\mu$m, die Streulichtkurven in den hier betrachteten vier Winkelbereichen, stärker voneinander differieren, so dass eine Zuordnung noch einfacher möglich ist.

b. Gleichzeitige Bestimmung von Partikelgröße und Brechungsindex

Dieser Teil der Erfindungsbeschreibung erweitert die Applikation a) für den Fall eines unbekannten Brechungsindex des jeweiligen Teilchens für die gleichzeitige experimentelle Bestimmung von Brechungsindex und Teilchengröße.

Die unter a) beschriebene Vorgehensweise bleibt prinzipiell gleich. Schon in den vier willkürlich gewählten Empfangswinkelbereichen des Ausführungsbeispiels a) gibt es keine Vierermatrix der Streulichtintensitäten in den Winkelbereichen mit gleichen Werten für unterschiedlichen Brechungsindex und Teilchengröße. Falls der experimentell vorhandenen Messfehler der Streuintensität größer ist, als die geforderte Genauigkeit, besteht auch hier die Möglichkeit, einen weiteren Winkelbereich (z.B. kleiner als 4°) zu benutzen oder, wie Abb. 1a dargestellt, zusätzlich simultan die Seitwärtsstreuung, z.B. unter einem Winkel von 90°, für eine Bestimmung der Partikelparameter zu nutzen.

Auch hier, wie in den bereits erläuterten Beispielen, muss bei nicht konsistenten Intensitätswerten auf nicht kugelige Partikel geschlossen werden, quantifizierbar z.B. durch Impulsformanalyse.

Der Brechungsindex von vielen Partikeln eines Stoffes ist herstellungsbedingt unterschiedlich, wie z.B. beim SiO$_2$ (Porosität). Mit der vorgeschlagenen Erfindung ist es möglich, selbst kleine Brechungsindexunterschiede zwischen analysierten Partikeln (hier Siliziumdioxyd) zu bestimmen. Dies soll beispielhaft an entsprechenden Streulichtkurven für n = 1,46 und n = 1,47 gezeigt werden.

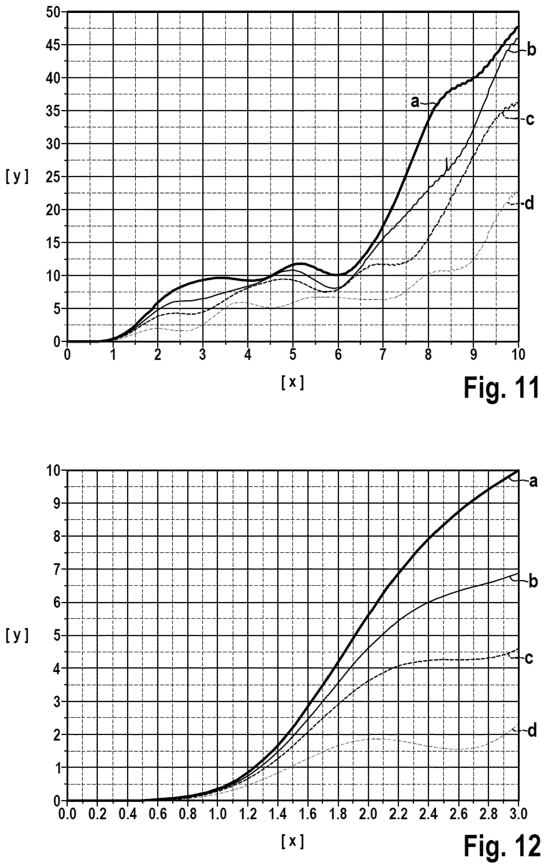

Für Partikel größer als 3 $\mu$m ist die Zuordnung unproblematisch (Abb.10 und Abb.11). Eine Überlagerung z.B. der Abb. 10 und 11 belegt, dass die Intensitäten zwischen den Winkelbereichen hinreichend unterschiedlich sind.

Es wird nun die erfindungsgemäße eindeutige Zuordnung des Brechungsindex für Teilchen mit unbekannter Größe für willkürlich ausgewählte Durchmesser, z.B. von 2 $\mu$m und 0,5 $\mu$m, beschrieben, wobei der Einfachheit halber exemplarisch ebenfalls von SiO$_2$ ausgegangen wurde (Abb.12 und Abb.13 bzw. Abb.14 und Abb.15.

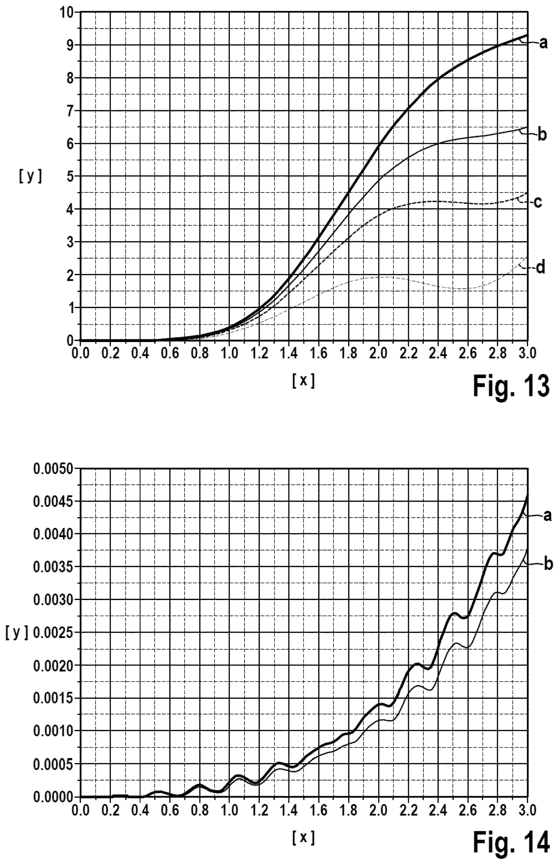

Wie in Abb.12 gezeigt, besitzen Partikel mit einem Durchmesser von 2,00 $\mu$m und einem Brechungsindex von n = 1,46 z. B. im Empfangswinkelbereich 4°-12,33° eine Streuintensität nach Mie, von I = 5,60. Es ergibt sich aber eine Zweideutigkeit, da diese Intensität auch Teilchen mit einem Brechungsindex von n = 1,47 bei einem Partikeldurchmesser von 1,95 $\mu$m haben (Abb. 13). Wird zusätzlich der Empfangswinkelbereich 8°-12,33° benutzt, streuen Teilchen mit einem Durchmesser von 2 $\mu$m und n = 1,46 mit einer Intensität von I = 1,84 (Abb.12). Das Intensitätsverhältnis beträgt 3,044. Im Fall eines angenommenen Brechungsindex von n = 1,47 ergibt sich eine Streuintensität von I = 1,91 (Abb.13) und ein

Intensitätsverhältnis von 2,93. Zur Absicherung/Bestätigung des ermittelten Brechungsindexes könnte zusätzlich die Seitwärtsstreuung hinzugezogen werden (Abb.14).

Zur Berechnung der Mie-Intensität der Seitwärtsstreuung wurde z.B. der halbe Öffnungswinkel (10,02°) des in Abb.1 skizzierten Photometers bei $\lambda$ = 532 nm angenommen.

Bei einem Partikeldurchmesser von 2,00 errechnet sich die Streulichtintensität zu I = 0,00116. Die Streulichtintensität für ein Partikel mit n = 1,47 und einem Durchmesser vom 1,95 $\mu$m ist um ca. 20% größer (I = 0,00133). Verallgemeinernd ist festzustellen, dass, für Teilchen mit einem Größenparameter von etwa k kleiner oder ungefähr gleich 20 die Seitwärtsstreuung zu benutzen ist. Der Größenparameter k berechnet sich, wie folgt:

$$k = \pi\ n\ x/\lambda$$

x: Partikeldurchmesser

n: Brechungsindex der kontinuierlichen Phase (Dispersionsmediums)

$\lambda$: Wellenlänge der Strahlung im Vakuum

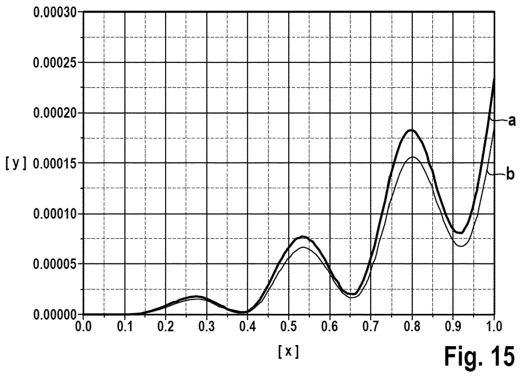

Die Bestimmung sowohl von Größe als auch Brechungsindex (1,46 oder 1,47) soll nun bei Partikeln der exemplarischen Größe von 0,5 $\mu$m gezeigt werden. Im Winkelbereich 8°-12,33° wird eine Intensität von I = 0,00765 gemessen. Das entspricht entweder 0,500 $\mu$m (n = 1,46) oder 0,487 $\mu$m (n = 1,47). In den hier betrachteten weiteren drei Empfangswinkelbereichen für die Vorwärtsstreuung unterscheiden sich die entsprechenden Intensitäten nur um etwa 1%. Mit Hilfe der Seitwärtsstreuung unter einem Winkel von 90° erhält man entsprechend Abb.15: I = 5,68 10$^{-5}$ (0,500$\mu$m; n=1,46) bzw. I = 5,91 10$^{-5}$ (0,487$\mu$m; n=1,47). Die Intensitätsdifferenzen sind groß genug, um eine Entscheidung fällen zu können.

Bei der anfänglichen Messung im Bereich 4°-12,33° ist zu beachten, dass auch hier, wie allgemein bei Messungen, eine Messungenauigkeit auftreten kann.

Generell ist zu fordern, dass die Anforderungen an die Messgenauigkeit der Intensität der Streulichtkurven durch die Abhängigkeit der Änderung der Streulichtintensität von der Partikelgröße (z.B. Abb. 14) bestimmt werden. Für größere Abhängigkeiten der Streuintensität von der Partikelgröße (Steilheiten, z.B. Abb. 15 im Größenbereich (0.70$\mu$m-0,75$\mu$m) sind Fehler von wenigen Prozent zu vernachlässigen.

Werden die notwendigen Messgenauigkeiten nicht erreicht, sind z. B. zusätzliche Winkelbereiche in Betracht zu ziehen.

Je kleiner die Teilchen werden, umso geringer werden die Intensitäts-Unterschiede in den Empfangswinkelbereichen. Im Rayleighbereich sind sie nicht mehr vorhanden.

Bei Partikel mit größeren Brechungsindices als SiO$_2$ (n = 1.46 - 1,47) ist die Bestimmung sowohl der Größe als auch des Brechungsindexes bei kleinen Teilchen (um 0,5 $\mu$m) tendenziell einfacher.

Die für jedes Teilchen bestimmten Brechungsindices sind nach der Größe zu ordnen bzw. zu klassifizieren und ergeben eine anzahlbasierte Verteilung des Merkmals Brechungsindex für die vermessene Gesamtpopulation. Trägt man für jedes Partikel den Brechungsindex gegen die jeweilige Streuintensität bzw. die daraus ermittelte Partikelgröße in einem 2D-Plot auf (vgl. auch Abb. 16), lassen sich Subpopulation in der Gesamtheit identifizieren und Rückschlüsse auf die Homogenität der Partikelsorten in der Messprobe ziehen.

Auch die Bestimmung des Extinkskoeffizienten (n'') ist prinzipiell möglich. Durch das Auftreten einer weiteren Variablen müssen dann mehr Empfangswinkel für die Messungen benutzt werden, um zwischen den vermehrten Vieldeutigkeiten eine Entscheidung herbeizuführen, da dann die Vielzahl der möglichen Kombinationen wesentlich erhöht wird.

Für die Erfindung ist es unerheblich, auf welche Weise die unterschiedlichen Empfangswinkelbereiche realisiert werden.

In einem Photometer können im Durchmesser unterschiedliche "beam stops" nacheinander eingefügt werden - vor oder nach der Empfangsoptik (Objektiv). Eine Blende konstanter Größe kann in dem divergierenden Streulichtkegel (oder fokussierenden Kegel) verschoben werden, um so verschiedene Empfangswinkelbereiche zu realisieren.

Auch ist es möglich, ringförmige Detektoren, die jeweils einen differentiellen Winkelbereich abdecken, zu kombinieren. Auch unterschiedliche Blenden in Kreissektoren können eingeführt werden. Es müssten dann die Streulichtintensitäten für die realisierten Anordnungen getrennt und gesondert experimentell erfasst werden z.B. mit einem verspiegelten Prisma oder einem ortsempfindlichen Photomultiplier. Vorteilhaft entfallen erfindungsgemäß die in den vorherigen Beispielen beschriebenen Wiederholungsmessungen in anderen Winkelbereichen, welches vorteilhaft den experimentellen Aufwand reduziert und durch die simultane Messung unterschiedlicher Winkelbereiche für das gleiche Partikel die Messgenauigkeit erhöht.

Es könnten prinzipiell auch mehrere Geräte eingesetzt werden. Selbst bei identischem apparatetechnischen Aufbau, identischer Justage und Kalibrierung ist jedoch von einer geringeren Trennschärfe auszugehen.

c). Bestimmung der Sphärizität im Falle eines Einzelteilchenstreulichtphotometers

Neben dem Brechungsindex wird die optische Eigenschaft eines Partikels auch durch dessen Geometrie (z.B. kugelförmig, prismatisch, ellipsoidal, zylindrisch oder irregulär etc.) determiniert. Die am häufigsten für Korngrößenbestimmung mittels Lichtstreuung angewandte Mie-Theorie, gilt nur für kugelförmige Partikel. Es ist aus der Theorie der Lichtstreuung bekannt, dass sich das Streuverhalten von volumengleichen sphärischen und asphärischen Partikeln unterscheiden.

Asphärische Partikel können nicht mit den in den Abschnitten a) und b) offenbarten Verfahren beschrieben werden. Wird es trotzdem angewandt, werden die theoretischen Mie-Streuintensitäten sowohl bei unterschiedlichen Streuwinkeln als auch Öffnungswinkeln nicht übereinstimmen. Dies bedeutet andererseits, dass das untersuchte Partikel qualitativ als asphärisch zu klassifizieren ist. Darauf wurde bereits im Abschnitt a) und b) mehrfach hingewiesen. Als quantitativer "Asphärizitätsindex" (AI) kann z.B. der prozentuale Unterschied zwischen dem Verhältnis des für zwei (oder mehr) Öffnungswinkel berechneten theoretischen Mie-Streuintensitäten und dem Verhältnis der unter gleichen Öffnungswinkeln experimentell bestimmten Streuintensitäten definiert werden.

Anders definierte Maßzahlen sind ebenfalls möglich. In analoger Weise kann der "Aspherizitätsindex" aus theoretischen Berechnungen der Intensität für zwei Streurichtungen und dem experimentell ermittelten Intensitätsverhältnis für entsprechende Streurichtungen ermittelt werden.

Die erfinderische Lösung erlaubt auch eine zweite Prozedur zur Ermittlung der "Asphärizität" der Teilchen. Um die Sphärizität zu bestimmen, wird der gesamte zeitliche Intensitätsverlauf des Streulichtimpulses während des Durchganges des Teilchens durch das Messvolumen (Abb. 1b) von der Streulichtapparatur gemessen und in real time analysiert oder gespeichert. Eine Speicherung des zeitlichen Verlaufs der Streuintensität mit anschließender Auswertung ist ebenfalls möglich.

Ist die Intensitätsverteilung im Laserfokus bekannt, kann aus dem ermittelten experimentellen Intensitätsverlauf beim Durchgang des Teilchens durch den Laserfokus und durch eine Entfaltung die Sphärizität des Teilchens abgeleitet werden. Des Weiteren kann erfindungsgemäß aus dem Vergleich der ermittelten Größe nach Mie (Kugelannahme) und unter Berücksichtigung des experimentellen kalibrierten Probenvolumenflusses eine theoretische Impulsdauer für das Teilchen berechnet werden. Der Vergleich der experimentell für jedes Teilchen nach hochaufgelöster Digitalisierung gemessenen Impulsdauer (Abb. 4a) mit der theoretisch berechneten kugeläquivalenten Zeitspanne ermöglicht erfindungsgemäß auch kleine Abweichungen zu detektieren und damit Asphärizitäten mit hoher Auflösung zu quantifizieren

Die so definierten quantitativen Partikelgeometriemerkmale sind nach der Intensität oder auch Größe zu ordnen und ergeben eine anzahlbasierte Verteilung des Merkmals in der gemessenen Gesamtpopulation. Trägt man für jedes Partikel den "Aspherizitätsindex - AI" gegen die Streuintensität bzw. die daraus ermittelte Partikelgröße auf, lässt sich die Verteilung von "AI" in der Probe quantifizieren bzw. mögliche Subpopulation in der Gesamtheit der Probe identifizieren. Neben der nach Mie bestimmten Partikelgröße kann die Verteilung auch bzgl. des ermittelten Brechungsindex aufgetragen werden. So würde Abb. 17 nahelegen, dass die disperse Phase aus zwei Partikelsubfraktionen mit unterschiedlichem Brechungsindex (unterschiedlichem Material oder nicht uniforme core-shell-particle) besteht und die Fraktion mit dem geringeren Brechungsindex eine wesentlich stärkere Streuung bzgl. des Asphärizitätsindex aufweist.

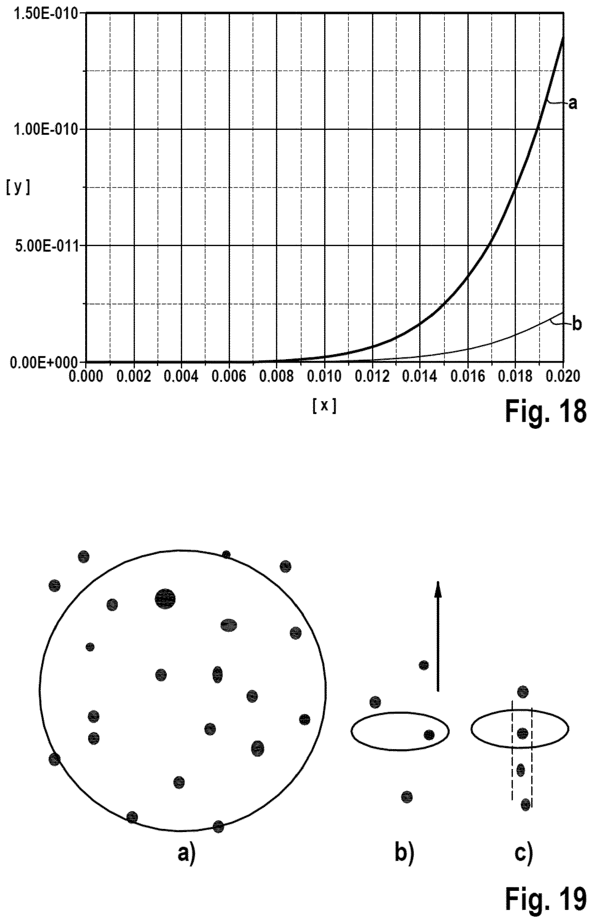

Die Anwendungsbeispiele a) bis c) wurden für die hydrodynamische Fokussierung beschrieben, da hier die verfahrenstechnischen Herausforderungen infolge der wesentlich geringeren Streulichtintensitäten (geringerer Brechungsindexkontrasts für Flüssigkeit - Partikel gegenüber Luft - Partikel) wesentlich größer sind. Applikationen für aerodynamische Fokussierung folgen jedoch prinzipiell den gleichen erfinderischen Lösungsansätzen. Insbesondere werden sich vorteilhaft die Messgrenzen zu wesentlich kleineren Partikelgrößen bis in den einstelligen Nanometerbereich verschieben, da sich der Brechungsindexkontrast um ein Mehrfaches vergrößert und der Anteil des Signalrauschens infolge der größeren Streulichtintensitäten deutlich minimiert ist. Dieser Sachverhalt ist in Abb.18 für SiliziumdioxidPartikel in Luft (n = 1,000) und Wasser (n = 1,334) verdeutlicht. Ein 20 nm Teilchen hat eine ca. 100-fache Streulichtintensität.

d) Extinktionsmodule mit hydrodynamischer Fokussierung

Die Erfindung unter a) - c) hat auch die erfinderische Aufgabe, auf die mit Fehlern behafteten Extinktionsmessungen (Fraunhofersche Näherungslösung) zu verzichten. Wenn aber bei nichtsphärischen Partikeln mit den beschriebenen Methoden und Rechnungen Zweifel bestehen bleiben, ist es zweckmäßig auf Extinktionsmessungen zurückzugreifen.

Dazu kann der Primärstrahl nach der Flowcell 5, vor dem beam stop, abgelenkt werden und wie bekannt ausgewertet werden. Eine zweite Möglichkeit auf diesen weiteren Messarm zu verzichten und die Messgrenze zu kleineren Teilchengrößen zu verschieben, zeigt die im Folgenden beschriebene Lösung.

Eine Ausdehnung des Messbereiches zu kleineren Teilchen steht die Sensitivität der bekannten Empfänger entgegen, die aus einer großen Lichtmenge kleine zeitliche Abschattungen (negative Lichtimpulse oder "Extinktionssignale") beim Durchgang eines Teilchens durch die relativ große Messzone erkennen sollen.

Für die Messung kleinerer Teilchen ist das Verhältnis konstante Lichtintensität der Lichtquelle in der Küvette (bevorzugt ein Laser 1) zu einem Extinktionssignal besonders ungünstig.

Um das Verhältnis zu verbessern hilft die hydrodynamische Fokussierung, welche im Gegensatz zum Stand der Technik die ursprüngliche Messzone für das Extinctionssignal verringert, indem die gesamte Messzone durch eine optische Anordnung auf eine Blende (bevorzugt Loch- oder rechteckige Blende) derart abgebildet wird, so dass nur das Gebiet mit den Extinktionssignalen durch diese Blende nicht ausgeblendet wird, welche danach auf einen Empfänger geleitet werden. Das Licht neben den hydrodynamisch fokussierten Teilchen wird also im Bildraum zu einem Großteil abgeblockt. Die Messzone wird nun nur durch den Partikelstromdurchmesser und nicht durch das gesamte beleuchtete Gebiet in der Küvette bestimmt.

Mit dieser Anordnung (Abb.19) gelingt es, die untere messbare Teilchengröße zu kleineren Durchmesser hin auszudehnen.

Bei a) wird der gesamte Focus mit Teilchen ausgefüllt oder durchströmt. Bei b) muss nachteilig mit stark verringerter Teilchenkonzentration gearbeitet werden, um eine Einzelteilchenregistrierung zu gewährleisten, da Koinzidenzfälle proportional zum Messvolumen auftreten. Durch die hydrodynamische Fokussierung können in c) höhere Konzentrationen (z.B. bis $10^{10}$ Partikel pro ml) vermessen werden. Der mögliche Teilchenstrom wird durch die gestrichelten Linien markiert. Das Gebiet außerhalb des Teilchenstroms wird abgeblendet.

Mit diesem Aufbau entsteht die Aufgabe, die Abbildung des Teilchenstroms (also die Extinktionsimpulse) genau in die Loch- oder rechteckige Blende zu legen, damit die Impulse auch vom Empfänger registriert werden können (Optisch sind die Helligkeitsschwankungen kleinerer Teilchen beim Durchgang durch den Laserstrahl zu schwach, um sie mit einer Kamera erkennen zu können). Das Ziel kann entweder durch vorhergehende Justierung bei Benutzung einer Streulicht-Photometeranordnung (ähnlich Abb.1a) und nachfolgender Entfernung der Blende am Objektiv oder Verschiebung der Lochblende, mittels x,y-Verstellung (also senkrecht zur Laserstrahlausbreitung), zu einem maximalen Extinktionsausschlag bei einem Referenzlatex hin, erfolgen. Allgemein hat eine Extinktionsmessung den Nachteil, dass ein Großteil der Vorwärtsstreuung auch auf den Empfänger trifft und die Extinktionsimpulse abschwächt.

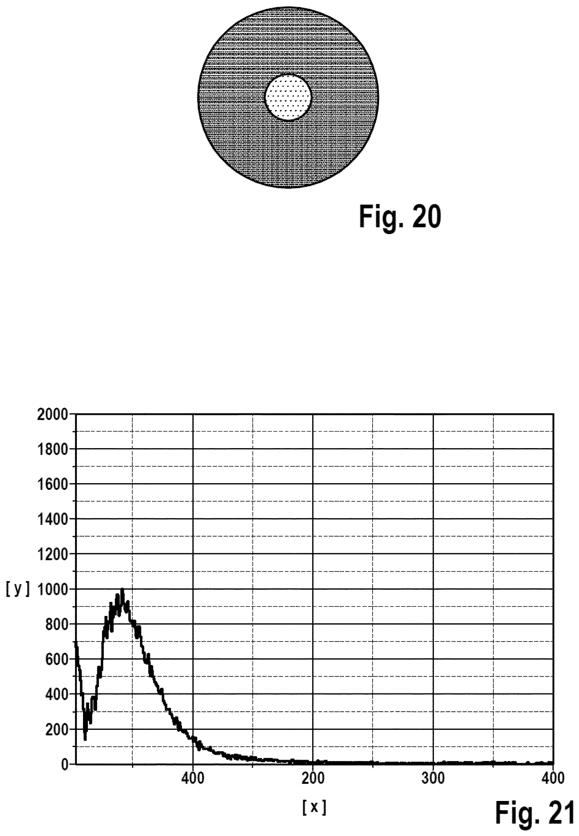

Ein Teil dieser Streulichtimpulse kann durch eine im Strahlengang, nach den oben beschriebenen Justagen, nach dem Objektiv eingefügte Lochblende, die nur den Laser-Primärstrahl durchlässt, eliminiert werden (Abb.20). Insbesondere für die Größenbestimmung kleiner Teilchen ist diese Anordnung wirksam.

Mit einem oben beschriebenen Versuchsaufbau gelang es Polystyrenpartikel mit einem Durchmesser von 0,726 $\mu m$ gegenüber dem Rauschpegel gut aufzulösen. Wird der Rauschpegel mathematisch mit geeigneten Glättungsalgorithmen weitgehend unterdrückt konnten

(0,55 und 0,50) $\mu m$ große PS- und SiO2-Partikel, im Original-Spektrum als Schulter erkennbar, gut registriert werden (Abb.21). Mit rauschärmerer Elektronik kann erwartet werden, den zugänglichen Partikelmessbereich weiter verschieben zu können.

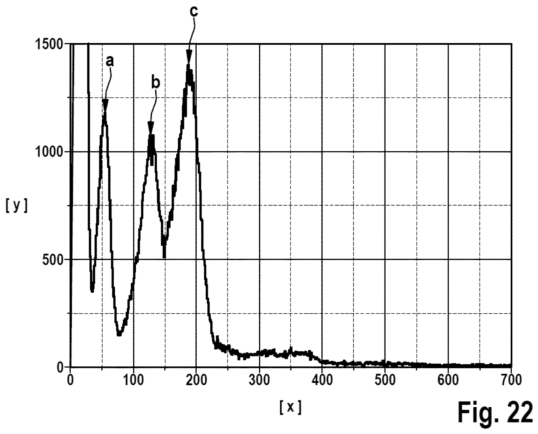

Eine Mischung aus 3 verschiedenen Latices im Größenbereich von 0,8 $\mu m$ bis zu 1,3 $\mu m$ (Peaks a, b und c in Abb.22) konnte mit gutem Auflösungsvermögen getrennt werden.

Für genauere Berechnung des Partikeldurchmessers (keine Fraunhofersche Näherungslösung) werden eine kugelige Form und ein bekannter Brechungsindex vorausgesetzt. Mit dem oben beschriebenen Photometer können diese Berechnungen auch ohne ausgedehnte Eichkurven, nur mit Messung eines Größenstandards, durchgeführt werden, da der Winkelbereich bekannt ist, in der Streustrahlung ebenfalls auf den Detektor gelangt. Durch Berechnung der durch den bekannten Eintrittswinkel einfallenden Streulichtstrahlung kann der Partikeldurchmesser genauer berechnet werden.

Um eine Teilchengrößenbestimmung zu vereinfachen oder erst möglich zu machen, müssen die Partikel auf eine nahezu konstante Laserintensität treffen. Deshalb kann es erforderlich sein, den Laserfocus durch Entfernen der verantwortlichen Linsen nach der Lichtquelle zu vergrößern.

Ein bestehendes Einzelteilchen-Streulichtphotometer (nach Abb.1a) kann durch die oben beschriebenen Modifikationen zu einem kombinierten Gerät erweitert werden. Die ohnehin vorhandene Blende vor oder hinter dem Objektiv (oder der Eintrittslinse) zum Abblocken des Primärstrahls wird zur Justierung benutzt und danach in geeigneter Weise aus dem Strahlengang (z.B. durch Hochklappen) entfernt. Die Lochblende zur Minderung der Streulichtsignale wird in den Strahlengang gebracht (zur Justierung muss sie entfernt sein).

Der Primärstrahlengang mit den Exinktionssignalen wird entweder nach Abschwächung, z.B. durch einen optischen Neutralfilter, auf den Photomultiplayer, oder abgelenkt, eventuell ohne Filter, auf einen anderen Empfänger gelenkt.

Die Vorrichtung findet Verwendung zur Analyse von mehreren Merkmalen von Einzelpartikeln bzw. der Klassifikation oder Identifikation von Partikelfraktionen im industriellen und akademischen Bereich, wie W/O bzw. O/W Emulsionen, Aerosolen, Slurries für Waverpolishing, Tinten- und Pigmentsuspensionen, Proben zellulärer und subzellulärer Partikel (u.a. Zellen, Viren, Bakterien) biologischen Ursprungs oder für Applikationen z.B. dem Design von Nanopartikeln, Quantifizierung der Stabilität von Dispersionen, Untersuchungen zum Lösungs-, Agglomeration- und Flockungsverhalten disperser Phasen, Quantifizierung des Fortschritts von Dispergierungen.

**Patentansprüche**

1. Verfahren für die Bestimmung der Partikelkenngrößen wie Partikelkonzentration, Partikelgröße, Größenverteilung und Anzahl der Partikel pro Größenklasse, Brechungsindex und Nichtsphärizität von mikroskaligen und submikroskaligen Partikeln in Durchflussmesszellen mit hydrodynamischer Fokussierung durch multiparametrische Erfassung von Extinktions- und/oder Streulichtsignalen, wobei die mittels eines Lasers mit variabler Strahlintensität und einem asphärischen Strahlquerschnitt (Fokus) erzeugten Streulicht- und die Extinktionssignale jedes einzelnen dispergierten Partikels in mindestens zwei Raumwinkelbereichen mit hoher Detektionsrate (Frequenz) gezählt und simultan vermessen, analog oder digital mit Simulationsrechnungen der Streulichtverteilung durch analytische oder numerische Verfahren für die verschiedenen Raumwinkelbereiche verglichen werden, um daraus die individuellen Partikelkenngrößen über einen vier Größenordnungen betragenden dynamischen Partikelgrößenbereich koinzidenzfrei auch für hohe Partikelkonzentrationen (z.B. $10^9$ Partikel/ml) der Messprobe zu bestimmen, wobei unterschiedliche Öffnungswinkel für die Vorwärtsstreuung oder mehrere Detektionsrichtungen für die Streulichtmessung sowie beliebige Kombinationen dieser zum Einsatz kommen, wobei die Partikelgröße und der Brechungsindex aus den jeweiligen Streuintensitäten der simultanen Messungen ermittelt werden;
wobei um die Sphärizität beziehungsweise die Nichtsphärizität zu bestimmen, der gesamte zeitliche Intensitätsverlauf des Streulichtimpulses während des Durchganges des Teilchens durch das Messvolumen gemessen und in Echtzeit analysiert oder gespeichert wird.

2. Verfahren nach Anspruch 1, **gekennzeichnet dadurch, dass** im Fall von Partikeln mit Größenparametern k größer oder ungefähr gleich 20 unterschiedliche Öffnungswinkel für die Vorwärtsstreuung zum Einsatz kommen.

3. Verfahren nach Anspruch 1 , **gekennzeichnet dadurch, dass** im Fall von Partikeln mit wenig unterscheidbaren Vorwärtsstreulichtkurven in den verschiedenen Empfangswinkeln (insbesondere bei einem Größenparameter k kleiner oder ungefähr gleich 20) eine oder mehrere Detektionsrichtungen in Seitwärtsrichtungen mit unterschiedlichen Sensitivitäten zum Einsatz kommen.

4. Verfahren nach mindestens einem der Ansprüche 1 bis 3, **gekennzeichnet dadurch, dass** die Simulationsrechnung mittels Mie-Theorie oder numerischen Simulationsrechnungen in Übereinstimmung mit dem entsprechenden optischen Aufbau durchgeführt wird und aus dem Vergleich zwischen Theorie und experimenteller Streuintensität die Mehrdeutigkeiten bezüglich der Partikelgröße aufgehoben wird und damit auch mikroskalige Partikel bis 100 μm, vermessen werden können.

5. Verfahren nach mindestens einem der Ansprüche 1 bis 4, **gekennzeichnet dadurch, dass** durch Konsistenzprüfung der modellierten und der experimentell bestimmten Intensitäten der Partikelimpulse für unterschiedliche Öffnungswinkel und/oder Raumwinkelbereiche optische Partikeleigenschaften, wie Größe oder Brechungsindices bestimmt werden.

6. Verfahren nach mindestens einem der Ansprüche 1 bis 5, **gekennzeichnet dadurch, dass** bei Nichtübereinstimmung der in den Winkelbereichen gemessenen Streulichtintensitäten mit den möglichen theoretischen Intensitätsmatrices des entsprechenden Partikels auf eine Asphärizität geschlossen und mittels Aspherizitätsindex quantifiziert wird.

7. Verfahren nach mindestens einem der Ansprüche 1 bis 6, **gekennzeichnet dadurch, dass** im Fall von Einzelpartikelstreuung aus dem Vergleich der experimentellen, digitalisierten Impulsform eines Partikels mit bekanntem Brechungsindex und den entsprechenden Simulationsrechnungen für kugelige Partikel für den gleichen Raumwinkelbereich die Form des Partikels als sphärisch oder nichtsphärisch klassifiziert wird.

8. Verfahren nach mindestens einem der Ansprüche 1 bis 7, **gekennzeichnet dadurch, dass** im Fall von Einzelpartikelstreuung, mit Hilfe von Theorien, die die Asphärizität behandeln quantitative Ergebnisse erhalten werden und/oder dass im Fall von Einzelpartikelstreuung, entsprechend den Merkmalen die Partikelfraktionen entsprechend z.B. Größe, Form und Brechungsindex klassifiziert und die Partikelanzahlen pro Merkmalseinheit bestimmt, angezeigt und ausgegeben werden
und/oder dass im Fall von Einzelpartikelstreuung, ein Laser mit variabler Strahlintensität und einem asphärischen Strahlquerschnitt (Fokus) mit konstanter Lichtintensität mindestens über den Querschnitt des Probenstroms eingesetzt wird oder im Fall von unzureichender Homogenität der Intensität diese durch mathematische Normierungsverfahren korrigiert wird.

9. Verfahren nach Anspruch 1, **gekennzeichnet dadurch, dass** das Ausmaß der hydrodynamischen bzw. aerodynamischen Messstromfokussierung in Abhängigkeit von der bekannten Ausgangsanzahlkonzentration der Messprobe oder auf der Grundlage eines ersten Messzyklus manuell oder automatisiert durch das Verhältnis des Sheathflows zum Probenstrom angepasst werden kann.

10. Verfahren nach Anspruch 1, **gekennzeichnet dadurch, dass** für die Größenbestimmung sehr breiter polydisperser Proben kein Austausch von Messkammern oder Änderungen der Flowcell vorzunehmen sind.

11. Verfahren nach mindestens einem der Ansprüche 1 bis 10 **gekennzeichnet dadurch, dass** nacheinander beam stopps eingefügt oder verschoben werden oder ringförmige Detektoren, die jeweils einen Winkelbereich abdecken, genutzt werden oder unterschiedliche Blenden in Kreissektoren eingeführt werden, wobei die unterschiedlichen Streulichtsignale getrennt gemessen und ausgewertet werden.

12. Verfahren nach mindestens einem der Ansprüche 1 bis 11 **gekennzeichnet dadurch, dass** durch Anwendung von ringförmigen Detektoren oder unterschiedlichen Blenden in Kreissektoren die in den Beispielen beschriebenen Wiederholungsmessungen in anderen Winkelbereichen, erfindungsgemäß entfallen, welches vorteilhaft den experimentellen Aufwand reduziert und durch die simultane Messung unterschiedlicher Winkelbereiche für das gleiche Partikel die Messgenauigkeit erhöht.

13. Verfahren nach mindestens einem der Ansprüche 1 bis 12, **gekennzeichnet dadurch, dass** für Extinktionsapplikationen durch hydrodynamische Fokussierung und durch Ausblenden der durch die Primärstrahlung beleuchteten Gebiete im Bildraum neben den hydrodynamisch fokussierten Teilchen das Verhältnis der Lichtintensität der Lichtquelle in der Küvette zu einem Extinktionssignal verbessert wird, um kleinere Teilchen zu detektieren.

14. Verfahren nach mindestens einem der Ansprüche 1 bis 13 **gekennzeichnet dadurch, dass** für Extinktionsapplikationen durch eine nach dem Objektiv eingefügte Lochblende, die den Durchmesser des Laser-Primärstrahl nach dem Objektiv besitzt, ein Großteil der Vorwärtsstreuung, die auch auf den Empfänger treffen würde, eliminiert wird und dadurch den Messbereich zu kleineren Teilchen hin erweitert und genauere Berechnungen der Partikelgröße zulässt.

15. Vorrichtung zur Bestimmung der Partikelkenngrößen wie Partikelkonzentration, Partikelgröße, Größenverteilung und Anzahl der Partikel pro Größenklasse, Brechungsindex und Nichtsphärizität von mikroskaligen und submikroskaligen Partikeln in Durchflussmesszellen mit hydrodynamischer Fokussierung durch multiparametrische Erfassung von Streulicht- und Extinktionssignalen, umfassend mindestens einen Laser (1) zur Erzeugung mindestens eines Laserstrahls (3) mit variabler Strahlintensität und einem asphärischen Strahlquerschnitt (Fokus),

mindestens ein optisches Eingangsmodul (2) zur Formung des Laserstrahls (3) und Gestaltung der asphärischen Fokusgeometrie (16), eine Durchflussmesszelle (5) mit hydrodynamischer Fokussierung, in welcher durch den Laserstrahl (3) Forwardstreulichtstrahlung (6) und Sidewardstreulichtstrahlung (7) erzeugt wird und welche einen Zufluss für den Hüllstrom (13),einen Probenzufluss (14) sowie einen Abfluss (15) aufweist, wobei der Hüllstrom (13) aus einem Reservoir (17) über eine Druckerzeugungsvorrichtung (18) kontrolliert und pulsationsfrei gefördert wird, optische Ausgangsmodule (8) im Forwardstreulichtstrahl (6) und optische Ausgangsmodule (9) im Sidewardstreulichtstrahl (7), halbdurchlässige Spiegel (10), Kameras (12), Photomultiplier (11a, 11b), wobei mittels der Photomultiplier (11a, 11b) Streulichtmessungen für eine unterschiedliche Zahl von Öffnungs- bzw. Empfangswinkeln durchführbar sind und aus den ermittelten Streulichtintensitäten des Forwardstreulichtstrahls (6) und des Sidewardstreulichtstrahls (7) die Partikelkenngrößen über Auswertealgorithmen ermittelbar sind, wobei die Partikelgröße und der Brechungsindex aus den jeweiligen Streuintensitäten der simultanen Messungen ermittelbar ist und wobei um die Sphärizität beziehungsweise die Nichtsphärizität zu bestimmen, der gesamte zeitliche Intensitätsverlauf des Streulichtimpulses während des Durchganges des Teilchens durch das Messvolumen messbar und in Echtzeit analysierbar oder speicherbar ist.

## Claims

1. A method for determining particle parameters such as particle concentration, particle size, size distribution and particle count per size class, refractive index, and non-sphericity of microscale and submicroscale particles in flow measuring cells with hydrodynamic focusing by multiparametric acquisition of absorbance and/or scattered light signals, wherein the scattered light and absorbance signals of each individual dispersed particle that are generated by means of a laser with variable beam intensity and an aspherical beam cross-section (focus) are counted and simultaneously measured at a high detection rate (frequency) in at least two solid angle ranges, and compared in analog or digital manner using simulation calculations of the scattered light distribution by analytical or numerical methods for the different solid angle ranges in order to determine therefrom the individual particle parameters over a dynamic particle size range of four orders of magnitude without coincidence, even for high particle concentrations (e.g. $10^9$ particles/ml) of the measurement sample, wherein use is made of different aperture angles for forward scattering or a plurality of detection directions for the scattered light measurement and of any desired combinations of these, wherein the particle size and refractive index are determined from the respective scattering intensities of the simultaneous measurements;

wherein, in order to determine sphericity or non-sphericity, the entire temporal intensity profile of the scattered light pulse during passage of the particle through the measuring volume is measured and analyzed or stored in real time.

2. The method according to Claim 1, **characterized in that**, in the case of particles with size parameters k greater than or approximately equal to 20, different aperture angles are used for forward scattering.

3. The method according to Claim 1, **characterized in that**, in the case of particles with poorly distinguishable forward-scattered light curves at the different receiving angles (in particular in the case of a size parameter k of less than or approximately equal to 20), one or more detection directions in sideways directions with different sensitivities are used.

4. The method according to at least one of Claims 1 to 3, **characterized in that** the simulation calculation is carried out using Mie theory or numerical simulation calculations in accordance with the corresponding optical setup and the comparison between theory and experimental scattering intensity eliminates ambiguities with regard to particle size and thus microscale particles of up to 100 $\mu$m can also be measured.

5. The method according to at least one of Claims 1 to 4, **characterized in that** optical particle properties, such as size or refractive indices, are determined by checking the consistency of the modeled and experimentally determined intensities of the particle pulses for different aperture angles and/or solid angle ranges.

6. The method according to at least one of Claims 1 to 5, **characterized in that**, in the event of the scattered light intensities measured in the angular ranges not matching the possible theoretical intensity matrixes of the corresponding particle, asphericity is inferred and quantified by means of an asphericity index.

7. The method according to at least one of Claims 1 to 6, **characterized in that**, in the case of single particle scattering, the shape of the particle is classified as spherical or non-spherical on the basis of the comparison of the experimental, digitized pulse shape of a particle having a known refractive index with the corresponding simulation calculations for spherical particles for the same solid angle range.

8. The method according to at least one of Claims 1 to 7, **characterized in that**, in the case of single particle scattering, quantitative results are obtained with the assistance of theories dealing with asphericity and/or **in that**, in the case of single particle scattering, the particle fractions are classified according to features, e.g., according to size, shape and refractive index, and the particle counts per feature unit are determined, displayed and output

and/or **in that**, in the case of single particle scattering, a laser with variable beam intensity and an aspherical beam cross-section (focus) with constant light intensity is used at least over the cross-section of the sample stream or, in the case of inadequate homogeneity of the intensity, the latter is corrected by mathematical normalization methods.

9. The method according to claim 1, **characterized in that** the extent of hydrodynamic or aerodynamic measurement current focusing can be adjusted manually or automatically from the ratio of sheath flow to sample flow as a function of the known initial count concentration of the measurement sample or on the basis of an initial measurement cycle.

10. The method according to Claim 1, **characterized in that** measuring chambers need not be changed nor flow cells modified for the size determination of very wide polydisperse samples.

11. The method according to at least one of Claims 1 to 10, **characterized in that**, in succession, beam stops are inserted or shifted, or annular detectors, each covering an angular range, are used, or different apertures in circular sectors are introduced, wherein the different scattered light signals are separately measured and evaluated.

**12.** The method according to at least one of Claims 1 to 11, **characterized in that**, by using annular detectors or different apertures in circular sectors, the repeat measurements in other angular ranges described in the examples are not necessary according to the invention, so advantageously reducing experimental effort and increasing measurement accuracy through the simultaneous measurement of different angular ranges for the same particle.

**13.** The method according to at least one of Claims 1 to 12, **characterized in that**, for absorbance applications, the ratio of the light intensity of the light source in the cuvette to an absorbance signal is improved by hydrodynamic focusing and by masking out the regions illuminated by the primary radiation in the image space adjacent to the hydrodynamically focused particles in order to detect smaller particles.

**14.** The method according to at least one of Claims 1 to 13, **characterized in that**, for absorbance applications, a pinhole inserted downstream of the objective lens and having the diameter of the primary laser beam downstream of the objective lens eliminates a major proportion of forward scattering that would also impinge on the receiver, so extending the measurement range to smaller particles and permitting more accurate particle size calculations.

**15.** An apparatus for determining particle parameters such as particle concentration, particle size, size distribution and particle count per size class, refractive index, and non-sphericity of microscale and submicroscale particles in flow measuring cells with hydrodynamic focusing by multiparametric acquisition of scattered light and absorbance signals, comprising:

at least one laser (1) for generating at least one laser beam (3) with variable beam intensity and an aspherical beam cross-section (focus), at least one optical input module (2) for shaping the laser beam (3) and creating the aspherical focus geometry (16), a flow measuring cell (5) with hydrodynamic focusing, in which forward-scattered light radiation (6) and sideward-scattered light radiation (7) is generated by the laser beam (3), and that has an inflow for the sheath flow (13), a sample inflow (14) and an outflow (15), wherein the sheath flow (13) is delivered from a reservoir (17) in controlled and pulse-free manner via a pressure generation apparatus (18), optical output modules (8) in the forward-scattered light beam (6) and optical output modules (9) in the sideward-scattered light beam (7), semitransparent mirrors (10), cameras (12),

photomultipliers (11a, 11b),
wherein, by way of the photomultipliers (11a, 11b), scattered light measurements can be carried out for a differing number of aperture or receiving angles and, using evaluation algorithms, the particle parameters can be determined from the determined scattered light intensities of the forward-scattered light beam (6) and of the sideward-scattered light beam (7), wherein the particle size and refractive index can be determined from the respective scattering intensities of the simultaneous measurements, and wherein, in order to determine sphericity or non-sphericity, the entire temporal intensity profile of the scattered light pulse during passage of the particle through the measuring volume can be measured and analyzed or stored in real time.

**Revendications**

**1.** Procédé pour la détermination des caractéristiques de particules telles que la concentration de particules, la taille de particules, la distribution de taille et le nombre de particules par classe de taille, l'indice de réfraction et la non-sphéricité de particules à l'échelle microscopique et submicroscopique dans des cellules de mesure de débit avec focalisation hydrodynamique par détection multiparamétrique de signaux d'extinction et/ou de lumière diffusée, dans lequel les signaux de lumière diffusée et d'extinction de chaque particule dispersée individuelle générés au moyen d'un laser à intensité de faisceau variable et d'une section transversale de faisceau asphérique (foyer) sont comptés et mesurés simultanément dans au moins deux plages d'angles solides avec un taux de détection élevé (fréquence), comparés de manière analogique ou numérique avec des calculs de simulation de la distribution de la lumière diffusée par des procédés analytiques ou numériques pour les différentes plages d'angles solides, afin d'en déterminer les caractéristiques de particules individuelles sur une plage de tailles de particules dynamique de quatre ordres de grandeur sans coïncidence, même pour des concentrations de particules élevées (p. ex. $10^9$ particules/ml) de l'échantillon de mesure, différents angles d'ouverture pour la diffusion vers l'avant ou plusieurs directions de détection pour la mesure de la lumière diffusée ainsi que des combinaisons quelconques de ceux-ci étant utilisés, la taille de particules et l'indice de réfraction étant déterminés à partir des intensités de diffusion respectives des mesures simultanées ;

dans lequel, pour déterminer la sphéricité ou la non-sphéricité, l'évolution temporelle totale de l'intensité de l'impulsion de lumière diffusée pendant le passage de la particule à travers le volume de mesure est mesurée et analysée ou enregistrée en temps réel.

2. Procédé selon la revendication 1, **caractérisé en ce que**, dans le cas de particules ayant des paramètres de taille k supérieurs ou approximativement égaux à 20, différents angles d'ouverture sont utilisés pour la diffusion vers l'avant.

3. Procédé selon la revendication 1, **caractérisé en ce que**, dans le cas de particules ayant des courbes de lumière diffusée vers l'avant peu distinctes dans les différents angles de réception (notamment pour un paramètre de taille k inférieur ou approximativement égal à 20), une ou plusieurs directions de détection dans des directions latérales avec des sensibilités différentes sont utilisées.

4. Procédé selon au moins l'une quelconque des revendications 1 à 3, **caractérisé en ce que** le calcul de simulation est effectué au moyen de la théorie de Mie ou de calculs de simulation numérique en accord avec la structure optique correspondante et, à partir de la comparaison entre la théorie et l'intensité de diffusion expérimentale, les ambiguïtés concernant la taille de particules sont levées et il est ainsi possible de mesurer également des particules à l'échelle microscopique jusqu'à 100 µm.

5. Procédé selon au moins l'une quelconque des revendications 1 à 4, **caractérisé en ce que** des propriétés optiques des particules, telles que la taille ou les indices de réfraction, sont déterminées par un contrôle de cohérence des intensités des impulsions de particules modélisées et déterminées expérimentalement pour différents angles d'ouverture et/ou plages d'angles solides.

6. Procédé selon au moins l'une quelconque des revendications 1 à 5, **caractérisé en ce qu'**en cas de non-concordance des intensités de lumière diffusée mesurées dans les plages angulaires avec les matrices d'intensité théoriques possibles de la particule correspondante, on conclut à une asphéricité et on la quantifie au moyen d'un indice d'asphéricité.

7. Procédé selon au moins l'une quelconque des revendications 1 à 6, **caractérisé en ce que**, dans le cas d'une diffusion de particules individuelles, la forme de la particule est classée comme sphérique ou non sphérique à partir de la comparaison de la forme d'impulsion expérimentale numérisée d'une particule dont l'indice de réfraction est connu et des calculs de simulation correspondants pour des particules sphériques pour la même plage d'angles solides.

8. Procédé selon au moins l'une quelconque des revendications 1 à 7, **caractérisé en ce que**, dans le cas d'une diffusion de particules individuelles, des résultats quantitatifs sont obtenus à l'aide de théories traitant de l'asphéricité et/ou **en ce que**, dans le cas d'une diffusion de particules individuelles, les fractions de particules sont classées en fonction des caractéristiques, p. ex. la taille, la forme et l'indice de réfraction, et les nombres de particules par unité de caractéristique sont déterminés, affichés et sortis, et/ou **en ce que**, dans le cas d'une diffusion de particules individuelles, un laser à intensité de faisceau variable et d'une section transversale de faisceau asphérique (foyer) avec une intensité lumineuse constante au moins sur la section transversale du courant d'échantillon est utilisé ou, dans le cas d'une homogénéité insuffisante de l'intensité, celle-ci est corrigée par des procédés mathématiques de normalisation.

9. Procédé selon la revendication 1, **caractérisé en ce que** le degré de focalisation hydrodynamique ou aérodynamique du courant de mesure peut être ajusté manuellement ou automatiquement en fonction de la concentration initiale connue en nombre de l'échantillon de mesure ou sur la base d'un premier cycle de mesure, par le rapport du courant de gaine au courant d'échantillon.

10. Procédé selon la revendication 1, **caractérisé en ce que**, pour la détermination de la taille d'échantillons polydispersés très larges, il n'est pas nécessaire de remplacer les chambres de mesure ou de modifier la cellule d'écoulement.

11. Procédé selon au moins l'une quelconque des revendications 1 à 10, **caractérisé en ce que** l'on insère ou déplace successivement des obturateurs ou que l'on utilise des détecteurs annulaires couvrant chacun une plage angulaire ou que l'on introduit différents diaphragmes dans des secteurs circulaires, les différents signaux de lumière diffusée étant mesurés et évalués séparément.

12. Procédé selon au moins l'une quelconque des revendications 1 à 11, **caractérisé en ce que**, par utilisation de détecteurs annulaires ou de diaphragmes différents dans des secteurs circulaires, les mesures répétées dans d'autres plages angulaires, décrites dans les exemples, ne sont pas nécessaires selon l'invention, ce qui réduit avantageusement les dépenses expérimentales et augmente la précision de mesure grâce à la mesure simultanée de différents plages angulaires pour la même particule.

13. Procédé selon au moins l'une quelconque des revendications 1 à 12, **caractérisé en ce que**, pour les applications d'extinction, le rapport entre l'intensité lumineuse de la source lumineuse dans la cuvette et un signal d'extinction est amélioré par une focalisation hydrodynamique et par la suppression des zones éclairées par le rayonnement primaire dans l'espace image à côté des particules focalisées de manière hydrodynamique, afin de détecter des particules plus petites.

14. Procédé selon au moins l'une quelconque des revendications 1 à 13, **caractérisé en ce que**, pour les applications d'extinction, un diaphragme à trous inséré après l'objectif, qui a le diamètre du faisceau laser primaire après l'objectif, élimine une grande partie de la diffusion vers l'avant qui frapperait également le récepteur et étend ainsi la plage de mesure vers les particules plus petites et permet des calculs plus précis de la taille de particules.

15. Dispositif pour la détermination des caractéristiques de particules telles que la concentration de particules, la taille de particules, la distribution de taille et le nombre de particules par classe de taille, l'indice de réfraction et la non-sphéricité de particules à l'échelle microscopique et submicroscopique dans des cellules de mesure de débit avec focalisation hydrodynamique par détection multiparamétrique de signaux de lumière diffusée et d'extinction, comprenant au moins un laser (1) pour générer au moins un faisceau laser (3) avec une intensité de faisceau variable et une section de faisceau asphérique (foyer),

   au moins un module d'entrée optique (2) pour former le faisceau laser (3) et concevoir la géométrie de foyer asphérique (16),
   une cellule de mesure de débit (5) avec focalisation hydrodynamique, dans laquelle le faisceau laser (3) produit un rayonnement de lumière diffusée vers l'avant (6) et un rayonnement de lumière diffusée latéralement (7) et qui présente une entrée pour le courant de gaine (13), une entrée d'échantillon (14) ainsi qu'une sortie (15), le courant de gaine (13) étant transporté de manière contrôlée et sans pulsations à partir d'un réservoir (17) par l'intermédiaire d'un dispositif de génération de pression (18),
   des modules de sortie optiques (8) dans le faisceau de lumière diffusée vers l'avant (6) et des modules de sortie optiques (9) dans le faisceau de lumière diffusée latéralement (7),
   des miroirs semi-transparents (10),
   des caméras (12),
   des photomultiplicateurs (11a, 11b),
   dans lequel des mesures de lumière diffusée peuvent être effectuées au moyen des photomultiplicateurs (11a, 11b) pour un nombre différent d'angles d'ouverture ou de réception et les caractéristiques de particules peuvent être déterminées par des algorithmes d'évaluation à partir des intensités de lumière diffusée déterminées du faisceau de lumière diffusée vers l'avant (6) et du faisceau de lumière diffusée latéralement (7), dans lequel la taille de particules et l'indice de réfraction peuvent être déterminés à partir des intensités de diffusion respectives des mesures simultanées et dans lequel, pour déterminer la sphéricité ou la non-sphéricité, l'évolution temporelle totale de l'intensité de l'impulsion de lumière diffusée pendant le passage de la particule à travers le volume de mesure peut être mesurée et analysée ou enregistrée en temps réel.

Fig. 1

Fig. 1a

**Fig. 1b**

**Fig. 2a**

Fig. 2b

Fig. 3a

Fig. 3b

Fig. 4

Fig. 4a

Fig. 5

1. Eingabe der Materialdaten/Messparameter
- Brechungsindex
- Wellenlänge
- Detektionswinkel

2. Mieberechnung
- Intensität über Partikelgröße
- Für gesamten Messbereich

3. Einlesen der Messdaten
- Zählerergebnisse der einzelnen Kanäle
- Proben- und Leersignal

4. Datennachbearbeitung
- Glättung (wenn aktiviert)
- Subtrahieren des Leersignals

5. Berechnung der Intensitäten je Kanal
- Berechnung der Intensität mit Mie für Referenzpartikel (-kanal)
- Intensitäten je Kanal durch Bezug auf Referenzkanal

6. Berechnung der Partikelgrößen
- Interpolation der Intensität von 5. und 2.

7. Berechnung der Partikelgrößenverteilung
- Intensitätsgewicht
- Anzahlgewichte
- Volumengewichtet

Fig. 6

Fig. 7

Fig. 8

Fig. 9

Fig. 10

Fig. 11

Fig. 12

Fig. 13

Fig. 14

Fig. 15

**Fig. 16**

**Fig. 17**

Fig. 18

a)          b)    c)

Fig. 19

Fig. 20

Fig. 21

Fig. 22

**IN DER BESCHREIBUNG AUFGEFÜHRTE DOKUMENTE**

**In der Beschreibung aufgeführte Patentdokumente**

- EP 2908119 B1
- EP 2388569 A1
- WO 2017072360 A1
- WO 2007100723 A2
- US 20110058168 A1
- US 6067157 A

- WO 2009151610 A2
- EP 2634557 A2
- US 2014152986 A1
- EP 2975378 A1
- EP 2338569 A1
- EP 238859 A1

**In der Beschreibung aufgeführte Nicht-Patentliteratur**

- *Analytical Chemistry*, 1987, vol. 59 (6), 846-850